(19) Europäisches Patentamt European Patent Office Office européen des brevets

(11) **EP 4 654 120 A1**

(12) **EUROPEAN PATENT APPLICATION**

(43) Date of publication:
**26.11.2025 Bulletin 2025/48**

(21) Application number: **25177478.2**

(22) Date of filing: **19.05.2025**

(51) International Patent Classification (IPC):
**G06T 1/20** (2006.01)   **G06T 11/00** (2006.01)
**G06T 15/00** (2011.01)   **G06T 15/04** (2011.01)

(52) Cooperative Patent Classification (CPC):
**G06T 1/20; G06T 11/001; G06T 15/005;
G06T 15/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024   GB 202407296**

(71) Applicant: **Imagination Technologies Limited
Kings Langley, Hertfordshire WD4 8LZ (GB)**

(72) Inventor: **Spreij, Tijmen
Kings Langley, WD4 8LZ (GB)**

(74) Representative: **Slingsby Partners LLP
1 Kingsway
London WC2B 6AN (GB)**

(54)   **FILTERING UNIT**

(57)   A processing unit comprising a filtering unit which is configured to apply filtering to a plurality of sequences of input values to determine output values is provided. The filtering unit comprises a control block comprising a plurality of sequencers and an arbiter. The control block is configured to allocate each of the sequences of input values to one of the sequencers, and each of the sequencers is configured to define a sequence of operations of a filtering process to be performed in respect of a sequence of input values allocated to that sequencer. The filtering unit also comprises a datapath block comprising a hardware logic component configured to perform operations by processing values for the operations to generate results of the operations as part of the filtering process. The arbiter is configured to control access to the hardware logic component of the datapath block by the sequencers according to prioritization rules, where each operation to be performed by the hardware logic component has a priority in accordance with the prioritization rules. Operations of a first set of operations have a high priority, wherein the first set of operations comprises input operations which involve input values. Operations of a second set of operations have a medium priority, wherein the second set of operations comprises intermediate operations which do not involve input values and which determine intermediate result values rather than determining output values. Operations of a third set of operations have a low priority, wherein the third set of operations comprises output operations which determine output values.

FIGURE 3

**Description**

CROSS-REFERENCE TO RELATED APPLICATION

This application claims priority from UK patent application 2407296.9 filed on 22 May 2024, which is herein incorporated by reference in its entirety.

TECHNICAL FIELD

The present disclosure is directed to processing units which comprise filtering units configured to apply filtering to input values to determine output values. In particular, the present disclosure relates to graphics processing units (GPUs) comprising texture filtering units configured to apply texture filtering to a plurality of sequences of input values to determined output values. The filtering may be part of a rendering process for rendering an image of a scene.

BACKGROUND

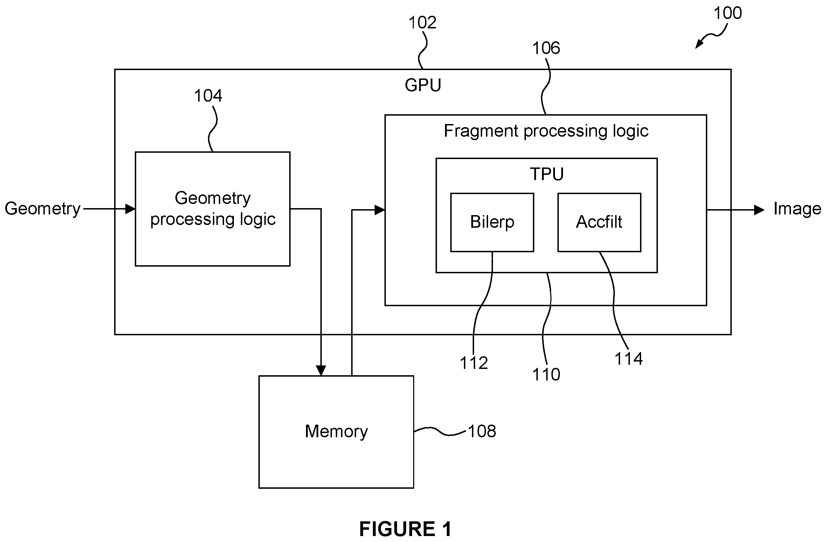

Graphics processing units (GPUs) are used to render images of 3D scenes. Surfaces of objects (or "geometry") in a scene to be rendered are typically represented using primitives. Some graphics processing units (GPUs), e.g. those which are configured to implement tile-based rendering techniques, implement a geometry processing phase and a fragment processing phase in order to render images. Figure 1 shows a graphics processing system 100 comprising a GPU 102 which comprises geometry processing logic 104 and fragment processing logic 106. The graphics processing system 100 also comprises a memory 108. The geometry processing phase is implemented using the geometry processing logic 104, and the fragment processing phase is implemented using the fragment processing logic 106. Some logic of the GPU 102, e.g. execution units, may be used for implemented parts of both the geometry processing phase and the fragment processing phase.

The GPU 102 receives geometry, which may be represented with a sequence of primitives, e.g. from an application which submits a draw call to the GPU. The primitives may represent objects in a scene to be rendered. For example, the primitives may be points, lines or polygons, such as triangles. A primitive may be represented with a set of vertices (e.g. a triangular primitive is represented with a set of three vertices), where data is associated with each vertex. For example, the vertex data for a vertex may describe the position of the vertex as well as information (which may be referred to as "attributes" or "varyings") relating to the way in which the primitive(s) including that vertex should be rendered. During the geometry processing phase the geometry processing logic 104 performs one or more geometry processing functions on the primitives, such as transforming the positions of the vertices into a rendering space and clipping/culling primitives that are outside of the rendering space. During the geometry processing phase the geometry processing logic 104 may also perform tiling on the processed primitives in order to determine which primitives are present within each tile of the rendering space. The geometry processing logic 104 outputs data, which can be stored in a buffer in the memory 108.

During the fragment processing phase, the fragment processing logic 106 reads in data from the memory 108 that was stored in the memory 108 by the geometry processing logic 104 during the geometry processing phase. The fragment processing logic 106 may process tiles of the rendering space independently. The fragment processing logic 106 reads primitive data for primitives from the memory 108 and then performs fragment processing on the primitives. The fragment processing may for example involve: (i) performing rasterisation on the primitives to determine primitive fragments representing the primitives at discrete sample positions within the rendering space, (ii) performing hidden surface removal on the primitive fragments to remove fragments which are occluded, e.g. by other fragments in the scene, and (iii) performing fragment shading and/or texturing on the remaining fragments to determine an appearance at each sample position. Each sample position may correspond to a pixel of an image being rendered. In some examples, each pixel may correspond to multiple sample positions, and an averaging process may be performed on the values determined at the sample positions in order to determine the rendered pixel values. The rendered pixel values can be stored, e.g. in a frame buffer. At the end of the fragment processing phase, the rendered pixel values can be output and used to represent an image. The image may be used in any suitable manner, e.g. the image may be stored, displayed on a display and/or transmitted to another device, e.g. over a network such as the internet.

Applying textures to fragments of primitives is a common way to determine the appearance of the primitive within a scene. A texture is typically represented as a set of one or more arrays of texels (i.e. "bitmaps"), wherein 'texels' in a texture are analogous to 'pixels' in an image. A texture can be sampled to determine a texture value to be applied to a primitive fragment at a particular position on the primitive. Reading directly from textures usually does not provide satisfactory image quality as the projection of 3D geometry often requires some form of resampling and as a result, as part of rendering a scene, a graphics processing unit (GPU) performs texture filtering. This may, for example, be because the primitive fragment positions do not map exactly to integer texel positions in the texture and in different situations, pixel

EP 4 654 120 A1

footprints can be larger or smaller than texel footprints. Texture filtering can be applied in different rendering techniques including rasterisation and ray tracing.

There are many different methods for texture filtering, including bilinear interpolation, volumetric filtering, anisotropic filtering and trilinear filtering and in various examples, these methods may be applied in various combinations. Filtering can be a computationally expensive operation and the hardware required to implement it can be large. The fragment processing logic 106 shown in Figure 1 includes a texture processing unit (TPU) 110, which comprises a bilinear interpolation unit ("Bilerp") 112 and an accumulation filter ("Accfilt") 114. The bilinear interpolation unit 112 comprises hardware configured to perform bilinear interpolation efficiently. The accumulation filter 114 comprises hardware configured to perform one or more of volumetric filtering, anisotropic filtering and trilinear filtering efficiently. The UK patent GB2567507B describes how the accumulation filter 114 can be implemented. The present disclosure relates primarily to improvements in the way in which the accumulation filter 114 is implemented.

It is generally desirable to: (i) reduce the latency of a processing unit such as a GPU, (ii) reduce the power consumption of the processing unit, and (iii) reduce the size (e.g. the silicon area) of the processing unit. There may be a trade-off between these three factors. For example, the size of the processing unit may be reduced (e.g. by implementing more functionality in software rather than in hardware) at the cost of increasing the latency and/or power consumption of the processing unit. As another example, the latency of the processing unit may be reduced (e.g. by increasing the amount of hardware implemented in the processing unit) at the cost of increasing the size and/or power consumption of the processing unit.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a processing unit comprising a filtering unit which is configured to apply filtering to a plurality of sequences of input values to determine output values, the filtering unit comprising:

a control block comprising a plurality of sequencers and an arbiter, wherein the control block is configured to allocate each of the sequences of input values to one of the sequencers, and wherein each of the sequencers is configured to define a sequence of operations of a filtering process to be performed in respect of a sequence of input values allocated to that sequencer; and

a datapath block comprising a hardware logic component configured to perform operations by processing values for the operations to generate results of the operations as part of the filtering process;

wherein the arbiter is configured to control access to the hardware logic component of the datapath block by the sequencers according to prioritization rules, wherein each operation to be performed by the hardware logic component has a priority in accordance with the prioritization rules, wherein:

operations of a first set of operations have a high priority, wherein the first set of operations comprises input operations which involve input values;

operations of a second set of operations have a medium priority, wherein the second set of operations comprises intermediate operations which do not involve input values and which determine intermediate result values rather than determining output values; and

operations of a third set of operations have a low priority, wherein the third set of operations comprises output operations which determine output values.

The filtering unit may be a texture filtering unit. The filtering process may be a texture filtering process.

The hardware logic component may be configured to:

in each of a plurality of clock cycles, receive a plurality of values for an operation; and

process the received values through a pipeline over a plurality of clock cycles to generate a result of the operation as part of the filtering process.

Said plurality of clock cycles over which the hardware logic component is configured to process the received values for an operation through the pipeline may be a number of clock cycles which is less than the number of sequencers in the control block.

The first set of operations may comprise all input operations.

The third set of operations may comprise all output operations which are not also input operations.

The second set of operations may comprise all intermediate operations which do not involve input values and which determine intermediate result values rather than determining output values.

The third set of operations may comprise all operations which do not involve input values and which accumulate values derived from all previously received input values for the sequence of operations.

The second set of operations may comprise all operations which do not involve input values and which do not accumulate values derived from all previously received input values for the sequence of operations.

Each of the sequencers may be configured to define, in a filtering mode which includes anisotropic filtering and trilinear filtering, a sequence of operations comprising: (i) a first set of anisotropic filtering operations which ends with a dot product operation, (ii) a second set of anisotropic filtering operations, and (iii) a trilinear interpolation operation which combines the result of the first set of anisotropic filtering operations with the result of the second set of anisotropic filtering operations to determine an output value for the sequence of operations, wherein the dot product operation at the end of the first set of anisotropic filtering operations may be in the third set of operations.

The second set of operations may comprise all intermediate operations which are not dot product operations at the end of a first set of anisotropic filtering operations in filtering modes which include anisotropic filtering and trilinear filtering.

The arbiter may be configured to control access to the hardware logic component of the datapath block by the sequencers by:

receiving requests from the sequencers identifying operations to be performed by the hardware logic component of the datapath block; and

comparing the priorities of operations identified by the requests to determine which of the identified operations is to be sent to the hardware logic component of the datapath block next.

The arbiter may be configured to control access to the hardware logic component of the datapath block by the sequencers by:

determining which of the identified operations has a highest priority of the identified operations;

if a single one of the identified operations is determined to have the highest priority of the identified operations, causing that one of the identified operations to be sent to the hardware logic component of the datapath block next; and

if a plurality of the identified operations are determined to have the highest priority of the identified operations, determining which of the plurality of the identified operations is to be sent to the hardware logic component of the datapath block next in accordance with a tie-breaking scheme.

The tie-breaking scheme may order the sequencers starting from a base sequencer. The arbiter may be configured to determine which of the plurality of identified operations that are determined to have the highest priority of the identified operations was requested by a sequencer that, according to the ordering of the sequencers in the tie-breaking scheme, is the first of the sequencers that requested the plurality of identified operations that are determined to have the highest priority.

Until all of the sequencers have had all of the input operations in their sequences of operations sent for processing by the hardware logic component, the base sequencer may be one of the sequencers that has not yet had all of the input operations in its sequence of operations sent for processing by the hardware logic component. The arbiter may be configured to, in response to determining that a final input operation of the sequence of operations requested by the sequencer that is currently the base sequencer has been sent to the hardware logic component, update an indication of which of the sequencers is currently the base sequencer such that, if possible, the base sequencer is a sequencer that has not yet had all of the input operations in its sequence of operations sent for processing by the hardware logic component.

The datapath block may further comprise a set of scratchpad registers for each of the sequencers. The set of scratchpad registers for a sequencer may be arranged to store intermediate result values generated by the hardware logic component when performing an operation in the sequence of operations defined by that sequencer.

The sequencers may be configured to determine, for each intermediate result value generated by the hardware logic component, a destination location in one of the scratchpad registers for storing the intermediate result value.

The hardware logic component may comprise a first input and a second input. The set of scratchpad registers for a sequencer may comprise:

a first subset of scratchpad registers which are configured to provide values to the first input of the hardware logic component but not to the second input of the hardware logic component; and

a second subset of scratchpad registers which are configured to provide values to the second input of the hardware logic component but not to the first input of the hardware logic component.

The datapath block may comprise multiplexing logic configured to:

receive values from the scratchpad registers;

receive input values; and

output values to the first and second inputs of the hardware logic component.

The arbiter may be configured to use the multiplexing logic to control which values are provided to the first and second inputs of the hardware logic component in each of a plurality of clock cycles.

The sequencers may be configured such that, if two intermediate result values are to be used together in a subsequent operation on the hardware logic component, a first of the two intermediate result values is stored in a scratchpad register of the first subset of scratchpad registers and a second of the two intermediate result values is stored in a scratchpad register of the second subset of scratchpad registers.

The set of scratchpad registers for each of the sequencers may comprise five scratchpad registers. The first subset of scratchpad registers for a sequencer may comprise two scratchpad registers and the second subset of scratchpad registers for the sequencer may comprise three scratchpad registers.

The hardware logic component may be a two-dimensional dot product unit.

The datapath block might not comprise a dedicated addition unit. The datapath block may be configured to perform addition operations using the two-dimensional dot product unit by setting coefficients of the two-dimensional dot product unit to have a value of 1.

The filtering unit may be configured to apply filtering in a filtering mode which includes one or more of volumetric filtering, anisotropic filtering and trilinear filtering. The filtering unit may be further configured to:

receive an indication of which of volumetric filtering, anisotropic filtering and trilinear filtering is to be applied; and

receive one or more filter coefficients for use in applying the indicated filtering.

The filtering unit may be arranged to receive the plurality of sequences of input values in sets of input values. The input values within a set may be interleaved input values from the plurality of sequences of input values. The input values within a set may be accessed from memory at the same time.

The processing unit may further comprise a bilinear interpolation unit configured to apply bilinear interpolation to values and to provide the input values to the filtering unit.

The input values may be input texture values. The output values may be output texture values.

Each sequence may represent a colour channel.

The filtering unit may be implemented in hardware logic.

The processing unit may be a graphics processing unit.

The filtering process may be part of a process for rendering an image of a scene. The process for rendering an image of a scene may be a rasterisation process or a ray tracing process.

The processing unit may be embodied in hardware on an integrated circuit.

There is provided a method of applying filtering to a plurality of sequences of input values to determine output values within a processing unit, wherein the processing unit comprises a filtering unit, the filtering unit comprising a plurality of sequencers and a datapath block which comprises a hardware logic component, the method comprising:

allocating each of the sequences of input values to one of the sequencers, wherein each of the sequencers defines a sequence of operations of a filtering process to be performed in respect of a sequence of input values allocated to that sequencer;

controlling access to the hardware logic component of the datapath block by the sequencers according to prioritization rules,

performing operations at the hardware logic component by processing values for the operations to generate results of the operations as part of the filtering process;

wherein each operation to be performed by the hardware logic component has a priority in accordance with the prioritization rules, wherein:

operations of a first set of operations have a high priority, wherein the first set of operations comprises input operations which involve input values;

operations of a second set of operations have a medium priority, wherein the second set of operations comprises intermediate operations which do not involve input values and which determine intermediate result values rather than determining output values; and

operations of a third set of operations have a low priority, wherein the third set of operations comprises output operations which determine output values.

Said controlling access to the hardware logic component of the datapath block by the sequencers may comprise:

receiving requests from the sequencers identifying operations to be performed by the hardware logic component of the datapath block;

determining which of the identified operations has a highest priority of the identified operations;

if a single one of the identified operations is determined to have the highest priority of the identified operations, causing that one of the identified operations to be sent to the hardware logic component of the datapath block next; and

if a plurality of the identified operations are determined to have the highest priority of the identified operations, determining which of the plurality of the identified operations is to be sent to the hardware logic component of the datapath block next in accordance with a tie-breaking scheme.

The tie-breaking scheme may order the sequencers starting from a base sequencer. Said determining which of the plurality of the identified operations is to be sent to the hardware logic component of the datapath block next in accordance with the tie-breaking scheme may comprise:
determining which of the plurality of identified operations that are determined to have the highest priority of the identified operations was requested by a sequencer that, according to the ordering of the sequencers in the tie-breaking scheme, is the first of the sequencers that requested the plurality of identified operations that are determined to have the highest priority.

Until all of the sequencers have had all of the input operations in their sequences of operations sent for processing by the hardware logic component, the base sequencer may be one of the sequencers that has not yet had all of the input operations in its sequence of operations sent for processing by the hardware logic component. The method may comprise, in response to determining that a final input operation of the sequence of operations requested by the sequencer that is currently the base sequencer has been sent to the hardware logic component, updating an indication of which of the sequencers is currently the base sequencer such that, if possible, the base sequencer is a sequencer that has not yet had all of the input operations in its sequence of operations sent for processing by the hardware logic component.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing unit as described herein.

There may be provided a processing unit comprising a filtering unit which is configured to apply filtering to a plurality of sequences of input values to determine output values, the filtering unit comprising:

a control block comprising a plurality of sequencers, wherein the control block is configured to allocate each of the sequences of input values to one of the sequencers, and wherein each of the sequencers is configured to define a sequence of operations of a filtering process to be performed in respect of a sequence of input values allocated to that sequencer; and

a datapath block comprising:

a hardware logic component comprising a first input and a second input, wherein the hardware logic component is configured to perform operations by processing values received at the first and second inputs for the operations to generate results of the operations as part of the filtering process; and

a set of scratchpad registers for each of the sequencers, wherein the set of scratchpad registers for a sequencer is arranged to store intermediate result values generated by the hardware logic component when performing an operation in the sequence of operations defined by that sequencer, wherein the set of scratchpad registers for a sequencer comprises:

a first subset of scratchpad registers which are configured to provide values to the first input of the hardware logic component but not to the second input of the hardware logic component; and

a second subset of scratchpad registers which are configured to provide values to the second input of the hardware logic component but not to the first input of the hardware logic component.

The datapath block may further comprise multiplexing logic configured to:

receive values from the scratchpad registers;

receive input values; and

output values to the first and second inputs of the hardware logic component.

The control block may further comprise an arbiter configured to use the multiplexing logic to control which values are provided to the first and second inputs of the hardware logic component in each of a plurality of clock cycles.

The sequencers may be configured to determine, for each intermediate result value generated by the hardware logic component, a destination location in one of the scratchpad registers for storing the intermediate result value.

The sequencers may be configured such that, if two intermediate result values are to be used together in a subsequent operation on the hardware logic component, a first of the two intermediate result values is stored in a scratchpad register of the first subset of scratchpad registers and a second of the two intermediate result values is stored in a scratchpad register of the second subset of scratchpad registers.

There may be provided a method of applying filtering to a plurality of sequences of input values to determine output values within a processing unit, wherein the processing unit comprises a filtering unit, the filtering unit comprising a plurality of sequencers and a datapath block which comprises a hardware logic component and a set of scratchpad registers for each of the sequencers, the method comprising:

allocating each of the sequences of input values to one of the sequencers, wherein each of the sequencers defines a sequence of operations of a filtering process to be performed in respect of a sequence of input values allocated to that sequencer;

performing operations at the hardware logic component by processing values received at first and second inputs of the hardware logic component for the operations to generate results of the operations as part of the filtering process; and

for each of the sequencers, storing intermediate result values generated by the hardware logic component when performing an operation in the sequence of operations defined by that sequencer in the set of scratchpad registers for that sequencer,

wherein the set of scratchpad registers for a sequencer comprises:

a first subset of scratchpad registers which are configured to provide values to the first input of the hardware logic component but not to the second input of the hardware logic component; and

a second subset of scratchpad registers which are configured to provide values to the second input of the hardware logic component but not to the first input of the hardware logic component.

More generally, the filtering unit described herein is an example of a computation unit which may process a plurality of sequences of input values to determine output values. In particular, there may be provided a processing unit comprising a computation unit which is configured to process a plurality of sequences of input values to determine output values, the computation unit comprising:

a control block comprising a plurality of sequencers and an arbiter, wherein the control block is configured to allocate each of the sequences of input values to one of the sequencers, and wherein each of the sequencers is configured to define a sequence of operations of a process to be performed in respect of a sequence of input values allocated to that sequencer; and

a datapath block comprising a hardware logic component configured to perform operations by processing values for the operations to generate results of the operations as part of the process;

wherein the arbiter is configured to control access to the hardware logic component of the datapath block by the sequencers according to prioritization rules, wherein each operation to be performed by the hardware logic component has a priority in accordance with the prioritization rules, wherein:

operations of a first set of operations have a high priority, wherein the first set of operations comprises input operations which involve input values;

operations of a second set of operations have a medium priority, wherein the second set of operations comprises intermediate operations which do not involve input values and which determine intermediate result values rather than determining output values; and

operations of a third set of operations have a low priority, wherein the third set of operations comprises output operations which determine output values.

The computation unit may be a filtering unit, e.g. a texture filtering unit. The computation unit may be configured to process the plurality of sequences of input values by applying filtering, e.g. texture filtering, to the plurality of sequences of input values to determine the output values. The sequence of operations defined by a sequencer may be a sequence of operations of a filtering process, e.g. a sequence of operations of a texture filtering process.

There may be provided a method of processing a plurality of sequences of input values to determine output values within a processing unit, wherein the processing unit comprises a computation unit, the computation unit comprising a plurality of sequencers and a datapath block which comprises a hardware logic component, the method comprising:

allocating each of the sequences of input values to one of the sequencers, wherein each of the sequencers defines a sequence of operations of a process to be performed in respect of a sequence of input values allocated to that sequencer;

controlling access to the hardware logic component of the datapath block by the sequencers according to prioritization rules,

performing operations at the hardware logic component by processing values for the operations to generate results of the operations as part of the process;

wherein each operation to be performed by the hardware logic component has a priority in accordance with the prioritization rules, wherein:

operations of a first set of operations have a high priority, wherein the first set of operations comprises input operations which involve input values;

operations of a second set of operations have a medium priority, wherein the second set of operations comprises intermediate operations which do not involve input values and which determine intermediate result values rather than determining output values; and

operations of a third set of operations have a low priority, wherein the third set of operations comprises output operations which determine output values.

The processing unit may be embodied in hardware on an integrated circuit. There may be provided a method of manufacturing, at an integrated circuit manufacturing system, a processing unit. There may be provided an integrated circuit definition dataset that, when processed in an integrated circuit manufacturing system, configures the system to manufacture a processing unit. There may be provided a non-transitory computer readable storage medium having stored thereon a computer readable description of a processing unit that, when processed in an integrated circuit manufacturing system, causes the integrated circuit manufacturing system to manufacture an integrated circuit embodying a processing unit.

There may be provided an integrated circuit manufacturing system comprising: a non-transitory computer readable storage medium having stored thereon a computer readable description of the processing unit; a layout processing system configured to process the computer readable description so as to generate a circuit layout description of an integrated circuit embodying the processing unit; and an integrated circuit generation system configured to manufacture the processing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a graphics processing system;

Figure 2A illustrates an example of volumetric filtering;

Figure 2B illustrates an example of anisotropic filtering;

Figure 2C illustrates an example of trilinear filtering;

Figure 3 is a first illustration of an example texture filtering unit;

Figures 4A, 4B and 4C show graphic representations of three different sequences of texture filtering operations that may be implemented by a texture filtering unit as described herein;

Figure 5 is a second illustration of the example texture filtering unit;

Figure 6 is a flow chart for a method of applying filtering to a plurality of sequences of input values to determine output values within a processing unit as described herein;

Figure 7 shows four different example sets of sequences of input values;

Figures 8A to 8G show example timing diagrams in different example filtering modes, illustrating the registers that are used for storing results from performing the operations of the sequences of operations in the different filtering modes;

Figure 9 shows a computer system in which a processing system is implemented; and

Figure 10 shows an integrated circuit manufacturing system for generating an integrated circuit embodying a processing unit.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. As described above, the Texture Processing Unit (TPU) 110 samples texels of a texture and performs filtering on the sampled texels to determine a filtered texture value for a fragment being processed in the GPU 102. In particular, the TPU 110 performs address calculation to locate the textures in the memory 108, requests texture information from the memory using the calculated addresses, decodes the requested texture data if required, and then performs filtering on texels before outputting the determined colour values, e.g. back to execution units in the GPU 102 which can apply the determined colour values to primitive fragments as part of the fragment processing phase.

The way in which the TPU 110 performs the texture filtering depends on a filtering mode that is being used in a particular application. The TPU has dedicated hardware to accelerate some of the most common filtering techniques. For example, the TPU 110 comprises a bilinear interpolation unit 112 configured to apply bilinear interpolation to texture values (e.g. texels). The TPU 110 can also perform more complex types of filtering, e.g. volumetric filtering of 3D textures, anisotropic filtering and/or trilinear filtering (involving texels from different mipmap levels). For performing these more complex types of filtering, the TPU comprises the texture filtering unit 114 (referred to as the accumulation filter, or "Accfilt", in Figure 1), which is implemented in hardware. If the TPU 110 does not support a particular filtering algorithm, it can either perform some of the steps in dedicated hardware and then pass the resulting intermediate values to execution units (i.e. "shader cores") in the GPU where the final calculations are performed, or it can bypass the dedicated hardware altogether and send the texels directly to the execution units.

Some of the filtering modes use bilinear filtering as a "building block" or first step in more complex filtering techniques. For example, an application doing anisotropic filtering would commonly first do a bilinear filtering step to calculate intermediate values, on which the anisotropic "weighted average" calculation is then applied. As such, the bilinear interpolation unit 112 may be configured to apply bilinear interpolation to texture values (e.g. texels) and then to provide values as input values to the texture filtering unit 114. However, in some other examples, the texture filtering unit 114 may receive texture values (e.g. texels) as input values that have not been processed by the bilinear interpolation unit 112.

The present disclosure relates to improvements to the texture filtering unit 114. As described above, the texture filtering unit 114 comprises hardware configured to perform different types of filtering. In particular, the texture filtering unit 114 is configured to perform any combination of one or more of volumetric filtering, anisotropic filtering and trilinear filtering. For example, the texture filtering unit 114 may receive two input samples per clock cycle and perform a filtering operation on them as defined by control inputs. The filtering operations can include any combination of volumetric, anisotropic and trilinear filtering operations and in the examples described in detail herein are performed in the order: volumetric filtering, anisotropic filtering then trilinear filtering.

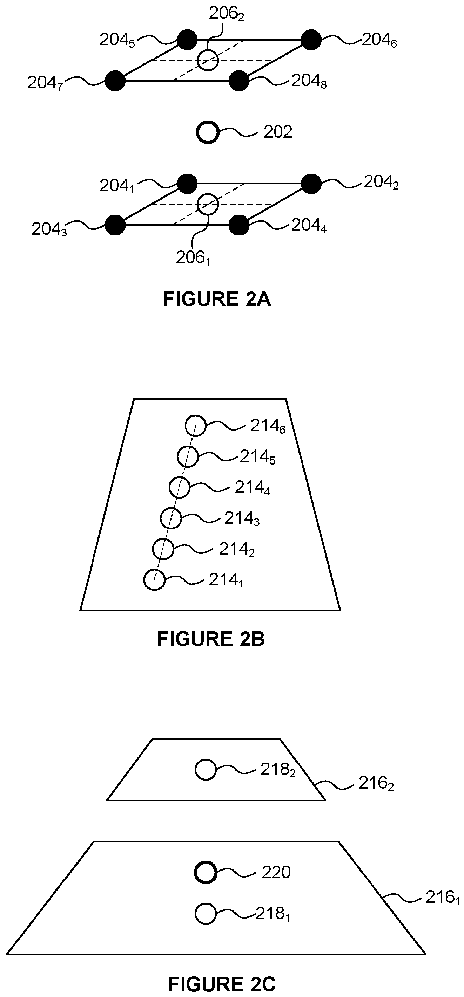

Figure 2A illustrates an example of volumetric filtering for filtering texels of a 3D texture. A texture value is to be sampled at a position 202 within the 3D texture. The TPU 110 fetches the eight texels $204_1$ to $204_8$ of the texture that are closest to the sample position 202. The eight fetched texels 204 form a cube around the sample position 202 as shown in Figure 2A. In particular, the eight texels form two planes on opposing sides of the sample position 202. As shown in Figure 2A texels $204_1$ to $204_4$ form a first plane below the sample position 202, and texels $204_5$ to $204_8$ form a second plane above the sample position 202. The bilinear interpolation unit 112 performs bilinear interpolation to determine interpolated values at the positions $206_1$ and $206_2$ within each of the planes. In particular, the bilinear interpolation unit 112 determines an interpolated value at the position $206_1$ in the first plane by performing bilinear interpolation on the texels $204_1$ to $204_4$ which form the first plane; and the bilinear interpolation unit 112 determines an interpolated value at the position $206_2$ in the second plane by performing bilinear interpolation on the texels $204_5$ to $204_8$ which form the second plane. The interpolated values at positions $206_1$ and $206_2$ are provided as input values to the texture filtering unit 114. The texture filtering unit 114 performs an interpolation (referred to herein as a volumetric filtering operation) to determine an output value representing a texture value at the sample position 202.

Figure 2B illustrates an example of anisotropic filtering. Anisotropic filtering may be used to improve rendering of textures at oblique angles. In order to implement anisotropic filtering the texture filtering unit 114 takes more samples in one direction than in a perpendicular direction. In the example shown in Figure 2B, the texture filtering unit 114 takes six samples $214_1$ to $214_6$. Typically, the samples a taken along a straight line, but other patterns are possible. A level of anisotropy is represented as an "anisotropic ratio", which may for example be between 2 and 16. The number of samples that are taken by the texture filtering unit 114 may be determined by rounding up the anisotropic ratio to the nearest even number. In order to determine the result of the anisotropic filtering, the texture filtering unit 114 determines a weighted average of the sample values. For example, for all but the last two samples, the weight in the weighted sum is determined to be 1/(anisotropic ratio), and then the weights for the last two samples are determined to be equal to each other and set to a value so that the sum of the weights for all of the samples is 1. In order to implement anisotropic filtering with an anisotropic ratio greater than 2, the texture filtering unit 114 is configured to: (i) sum up the "non-last samples", i.e. the samples other than the last two samples, (ii) separately sum up the last two samples, and (iii) perform a dot product of the two sums using appropriate weights. When the anisotropic ratio is 2 then there are only two samples. In order to implement anisotropic filtering with an anisotropic ratio of 2, the texture filtering unit 114 is configured to perform a dot product to multiply both sample values with the same weight and add the result.

Figure 2C illustrates an example of trilinear filtering. A texture can be stored as a "mipmap", i.e. as a set of arrays of texels at different levels of resolution. For example, the height and width of each mipmap level may be a factor of two smaller than the previous mipmap level, such that each mipmap level is a quarter of the size of the previous mipmap level. Mipmaps are used to avoid minification/magnification artefacts when a texture is sampled which can be caused by sampling a texture at a resolution that is not appropriate for the resolution of the primitive fragment to which the sampled texture value is to be applied. The TPU 110 may determine a level of detail (LOD) at which the texture is to be sampled. The LOD may depend upon the distance between the viewpoint in the scene and the fragment to which the texture is being applied. The determined LOD might not correspond exactly to the resolution of one of the mipmap levels of the texture, i.e. the determined LOD often falls in between two mipmap levels. The TPU 110 selects the two mipmap levels that are closest to the determined LOD and determines filtered values from the two mipmap levels. For example, with reference to Figure 2C, the TPU 110 selects two mipmap levels $216_1$ and $216_2$ that are closest to the determined LOD. The TPU 110 determines a first filtered value $218_1$ from the first mipmap level $216_1$, and determines a second filtered value $218_2$ from the second mipmap level $216_2$. The texture filtering unit 114 then determines the result of trilinear filtering (represented as 220 in Figure 2C) by performing an interpolation between the first and second determined filtered values $218_1$ and $218_2$, where the fraction of LOD between the two mipmap levels can be used as an interpolation coefficient in the interpolation.

As described above, the texture filtering unit 114 can perform any combination of one or more of volumetric filtering, anisotropic filtering and trilinear filtering.

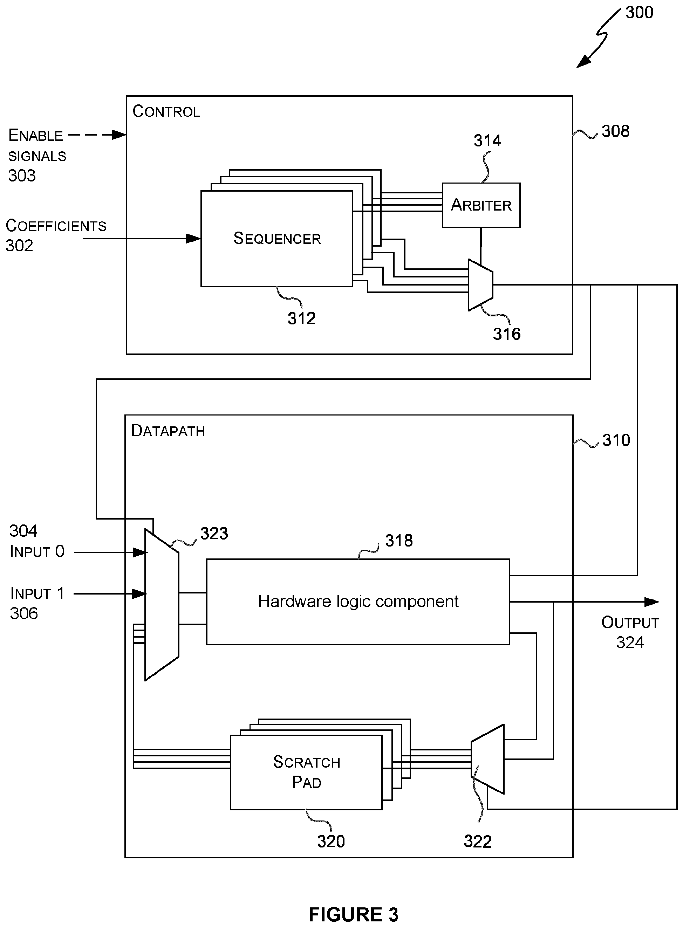

Figure 3 is a first illustration of an example texture filtering unit 300 which may be implemented as the texture filtering unit 114 in the processing system 100 shown in Figure 1. As shown in Figure 3, the texture filtering unit 300 comprises several inputs, including a plurality of filter coefficients 302 and two input values 304 and 306, which may be texture values. These input values 304, 306 are the input data that is filtered in the filtering operation performed by the texture filtering unit 300 and the exact filtering operation that is performed is specified, at least in part, by the filter coefficients 302. In various examples, the texture filtering unit 300 may receive one input value per clock cycle (via either input 304 or input 306); however, in other examples, a texture filtering unit may be configured to receive two or more input values per clock cycle, and if more than two input values are to be received per clock cycle then the texture filtering unit 300 may comprise additional inputs for this purpose (not shown in Figure 3). The input values that are received (which may, for example, be the result of bilinear filtering performed by the bilinear interpolation unit 112) are usually floating-point values (e.g. full precision binary floating-point format which may be referred to as F32); however the hardware and methods described herein may be used with input values of any format (e.g. half precision binary floating-point format, F16, or integer format).

The texture filtering unit 300 further comprises a control block 308 and a datapath block 310. The control block 308 comprises a plurality of sequencers 312, an arbiter 314 and a multiplexer 316. In various examples, the datapath block 310 may comprise four identical sequencers 312 as shown in Figure 3. In other examples, there may be a different number of sequencers. The datapath block 310 comprises a hardware logic component 318 and a set of scratchpad registers 320 for each sequencer 312 (e.g. four sets of scratchpad registers, one per sequencer, in the example shown in Figure 3). In various examples, each set of scratchpad registers 320 may comprise five or six registers. In other examples there may be a different number of registers in each set of scratchpad registers 320 and in some examples, the scratchpad registers 320 may be replaced by alternative memory structures that are configured to have similar functionality (e.g. FIFOs or other memories).

The datapath block 210 also comprises multiplexing logic 322 and 323 that controls where intermediate values are stored, i.e. first multiplexing logic 322 (which may be referred to as the store multiplexer) controls where an intermediate value is stored (i.e. in which set of scratchpad registers 320 it is stored) and second multiplexing logic 323 (which may be referred to as the source multiplexer) controls what values (whether input values or intermediate values) are input to the hardware logic component 318. In other examples, the multiplexers 322-323 may be replaced by alternative logic that performs a similar switching and/or selection function. The operation of the multiplexing logic 322-323 is controlled by the control block 308 in the example shown in Figure 3, e.g. as shown by the control lines shown in Figure 3 from the arbiter 314 to the multiplexers 322 and 323 and to the hardware logic component 318. The arbiter 314 can pick a sequencer operation to execute and can determine the store destination for that instruction, wherein an indication of the destination is sent through the hardware logic component in parallel with the operation, which then controls the multiplexing (of multiplexer 322) and write-enable of the scratchpad registers 320. In other examples, however the control of the multiplexers 322-323 may be implemented as a separate pipeline, a FIFO, or other state machine.

The texture filtering unit 300 receives a plurality of input values (e.g. texture values) at inputs 304, 306, and generates a single filtered output (which is output via output 324) in the datapath block 310 under the control of the control block 308. The filtering is implemented by the hardware logic component 318 which may, for example, comprise one or more addition units, multipliers, two-dimensional dot product units (DP2s), three-input additions, fused multiply-adds (FMAs), or any other suitable computational logic component. In the main examples described herein the hardware logic component 318 is a two-dimensional dot product unit (DP2), which given four inputs, a,b,c,d, can output a value of ac+bd and can also allow (c-1)*a+c*b to be calculated efficiently. A sequence of operations may require several passes through the hardware logic component 318 (as described in more detail below) and intermediate results (i.e. results output by the hardware logic component 318 which are not a final filtered output value) are stored in the scratchpad registers 320 for the corresponding sequencer (i.e. the sequencer that was controlling the pipeline when the intermediate result was generated). These intermediate results can then be input, from the scratchpad registers 320 to the hardware logic component 318, as an input to a subsequent pass through the hardware logic component 318. In various examples a final filtered output value may also be stored in the scratchpad registers 320 (e.g. where it cannot be sent to the output yet, but the texture filtering unit wants to continue more computations without delay). Such stored final filtered output values can then be output from the scratchpad registers, either bypassing the hardware logic component 318 or passing through the hardware logic component, e.g. as an interpolation with a coefficient of zero. This ability to store a final filtered output value may significantly improve performance when alternating between simple and complex filtering functions (e.g. between an aniso-2 filtering mode and an aniso-16 filtering mode).

In various examples the texture filtering unit 300 is arranged to perform any combination of volumetric, anisotropic and trilinear filtering using the hardware logic component 318; however, in other examples, the texture filtering unit 300 is arranged to perform any combination of a different set of two or more filtering methods and may perform any kind of linear filtering and in various examples also bilinear filtering. The coefficients 302 that are input to the texture filtering unit 300 therefore comprise at least one coefficient for each filtering method that the texture filtering unit 300 can implement, e.g. vfrac, afrac and tfrac (referred to collectively as *frac), where vfrac is the coefficient for volumetric filtering, afrac is the coefficient for anisotropic filtering and tfrac is the coefficient for trilinear filtering. In various examples, the values of the coefficients may change every clock cycle or may change less frequently or may be constant (e.g. vfrac may change each clock cycle, afrac may change less often and tfrac may be constant). In scenarios where only a proper subset of the filtering methods are used, the coefficients of those methods not being used may be set to a default value (e.g. where anisotropic filtering is not used the coefficient, afrac, may be set to one) or separate enable signals 303 may additionally be provided.

In examples where enable signals 303 are provided these may have a value that specifies whether each filtering method (or mode) is enabled and any necessary parameters for the filtering method (e.g. the anisotropic filtering mode). For example, three enable signals may be provided as detailed below, although certain combinations (e.g. {0,0,0}) may not be permitted or may have special meaning (e.g. resulting in bypassing inputs to the output):

| Enable signal | Possible values | Meaning |
|---|---|---|
| vol_en | 0, 1 | Volumetric filtering is disabled or enabled respectively |
| tri_en | 0, 1 | Trilinear filtering is disabled or enabled respectively |
| ani_rt | 0, 1, 3, 5, 7, 9, 11, 13, 15 | Anisotropic filtering is disabled (ani_rt=0) or enabled (ani_rt>0), where, if anisotropic filtering is enabled, the number of texture values combined is given by one more than the value of the enable signal (i.e. ani_rt+1) |

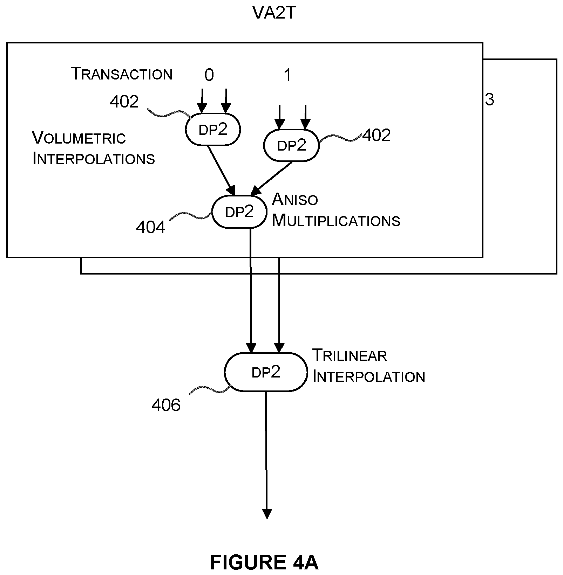

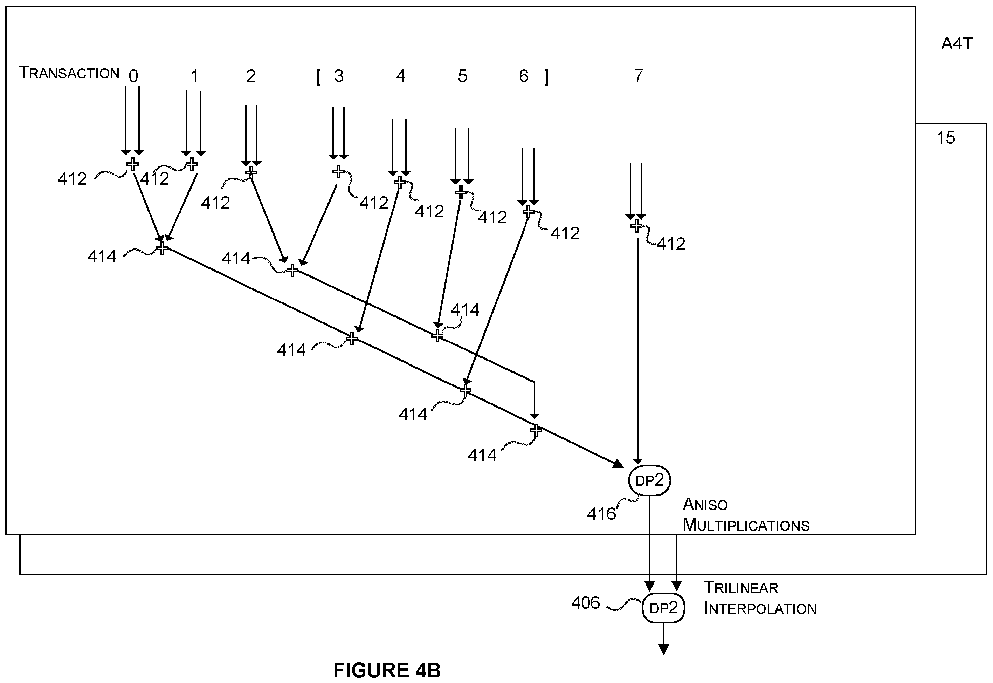

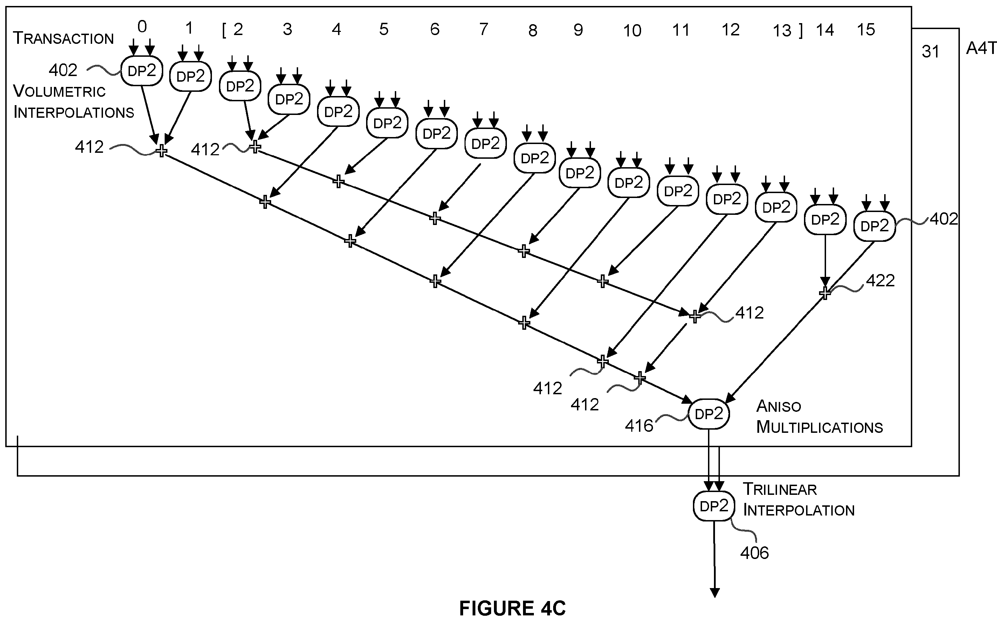

The texture filtering unit 300 is arranged to perform filtering using any combination of one or more of a set of filtering methods and as described above, this may involve computations using multiple input values and multiple passes through the hardware logic component 318 (with each pass using different input values, where the input values may be input texture values or intermediate values calculated in a previous pass through the hardware logic component). Examples of the texture filtering operations are shown in Figures 4A, 4B and 4C. In these examples, the hardware logic component 318 is a DP2 unit.

Figure 4A shows a graphic representation of a sequence of operations that is performed when the texture filtering unit 300 combines volumetric filtering and anisotropic-2 filtering (e.g. where vol_en=1 and ani_rt=1). In this example, volumetric interpolations are performed first by two successive operations 402 using the DP2 unit 318, and then the DP2 unit 318 is used again for the anisotropic multiplications and final addition (block 404, i.e. a third pass through the DP2 unit 318). If trilinear filtering is also used (e.g. where vol_en=1, tri_en=1 and ani_rt=1) as shown in Figure 4A then the DP2 unit 318 may be used again for the trilinear interpolation (block 406, i.e. in a fourth pass through the DP2 unit 318). The total number of input values is given by:

$$\textit{Number of input values = (vol\_en +1)* (ani\_rt +1)* (tri\_en + 1)}$$

and hence if only volumetric filtering and anisotropic-2 filtering are used, there are only 4 inputs (2*2=4) whereas if trilinear filtering is also used, there are 8 inputs (2*2*2=8). Where there are two inputs per input transaction, the number of transactions is given by the number of inputs divided by two and the numbers at the top of the operation order diagrams shown in Figures 4A to 4C refer to these transactions, rather than inputs.

Figure 4B shows a graphic representation of a sequence of operations that is performed when the texture filtering involves anisotropic-4+, where this refers to all anisotropic modes from 4 onwards (e.g. where vol_en=0 and ani_rt>1), and the square brackets around the input transactions in Figure 4B indicate those transactions that would not occur for anisotropic-8. In this example, all 16 input values (1*16*1=16) are summed in groups of two first by 8 successive operations 412 using the DP2 unit 318, i.e. 8 passes through the DP2 unit 318. In the example shown in Figure 4B, the groups (0-6) are then accumulated as: ((((0+1)+4)+6)+((2+3)+5)) using multiple operations using the DP2 unit 318 (blocks 414, i.e. six further passes through the DP2 unit 318) before the DP2 unit 318 is used for the anisotropic multiplications and final addition (block 416). If trilinear filtering is also used (e.g. where vol_en=0, tri_en=1 and ani_rt=15) then the DP2 unit 318 may be used again for the trilinear interpolation (block 406) and the total number of input values used is 32 (i.e. 1*16*2=32). It will be appreciated that the grouping of inputs shown in Figure 4B is just one example and other examples may accumulate groups in a different way.

Figure 4C shows a graphic representation of a sequence of operations that is performed when the texture filtering involves volumetric filtering and anisotropic-4+ (e.g. where vol_en=1 and ani_rt=15 such that there are 2*16*1=32 inputs, although like in Figure 4B the square brackets around the input transactions in Figure 4C indicate those transactions that would not occur for anisotropic-4). In this example, volumetric interpolations are performed first by a plurality successive operations using the DP2 unit 318 (blocks 402, i.e. 16 passes through the DP unit 318), then the anisotropic inputs (0-13) are, in this example, accumulated as: (((((((0+1)+4)+6)+8)+10)+12)+(((((2+3)+5)+7)+9)+11)+13)) by a plurality of successive operations using the DP2 unit 318 (blocks 412, i.e. 13 passes through the DP unit 318). As described above, the order of the accumulation shown in Figure 4C is shown by way of example only and other orders may alternatively be used. The aniso_last inputs (14-15) are summed together (block 422, i.e. a further pass through the DP2 unit 318) and then the DP2 unit 318 is used for the anisotropic multiplications and final addition (block 416). If trilinear filtering is also used (e.g. where vol_en=1, tri_en=1 and ani_rt=15) then the DP2 unit 318 is used again for the trilinear interpolation (block 406), and the total number of input values used is 64 (i.e. 2*16*2=64).

The order in which input values and/or intermediate values are input to the hardware logic component 318 (e.g. to implement the texture filtering operations shown in any of Figures 4A to 4C) is controlled by the control block 308. Each sequencer 312 operates in one of a set of pre-defined and hard-coded operating modes, where the selected mode defines the sequence of filtering operations that is applied to a stream of input texture values or on multiple interleaved streams of input texture values. Selection of a mode of operation by a sequencer is dependent upon the enable signals 303 (which may be referred to as control inputs or mode inputs). Each of the hard-coded operation modes may be defined in a micro-program which may be non-programmable and synthesised into hardware and may comprise a state machine (e.g. a finite state machine (FSM)) that runs on a stored function. The FSM defines a sequence of operations to be performed on a set of input data to generate the final output of the texture filtering operation.

As shown in FIG. 3, the control block 308 comprises a plurality of sequencers 312 (e.g. four sequencers) and the sequencers 312 have overlapping activity, i.e. more than one sequencer 312 may request the use of the hardware logic component 318 at the same time. The sequencers 312 therefore indicate their status (e.g. in the form of requests for access to resources, where these resources include the hardware logic component 318 and may also include the output 324) to the arbiter 314. The arbiter 314 grants access to the resources (e.g. to the hardware logic component 318) according to a fixed priority scheme (i.e. based on pre-defined rules). As described in more detail below, the arbiter 314 prioritises operations that involve a new input value (e.g. input 304 or input 306) and deprioritises requests which determine output values. As shown in Figure 3, the arbiter 314 controls access to the resources in the datapath block by controlling the multiplexer 316 within the control block 308. The output from the multiplexer 316 comprises control signals that control the operation of the source multiplexer 323 in the datapath block 310 and hence control what values are input to the hardware logic component 318 in any clock cycle.

The arbiter 314 can control the order in which results are output by controlling access to the hardware logic component 318 for the final DP2 operation in any sequence of operations (e.g. block 404 or 406 in Figure 4A, block 416 or 406 in Figures 4B and 4C) and in various examples an operation may be prevented from starting (by the arbiter 314) if the output is not ready. This means that additional storage (e.g. to hold more than one result) at the output 324 is not required. In other examples, however, storage may be provided prior to the output 324 and final results may be stored in that storage and output in an order controlled by the control block 308 or, as described above, outputs may be stored in the scratchpad 320 (or a temporary register) in the event that the output is not ready.

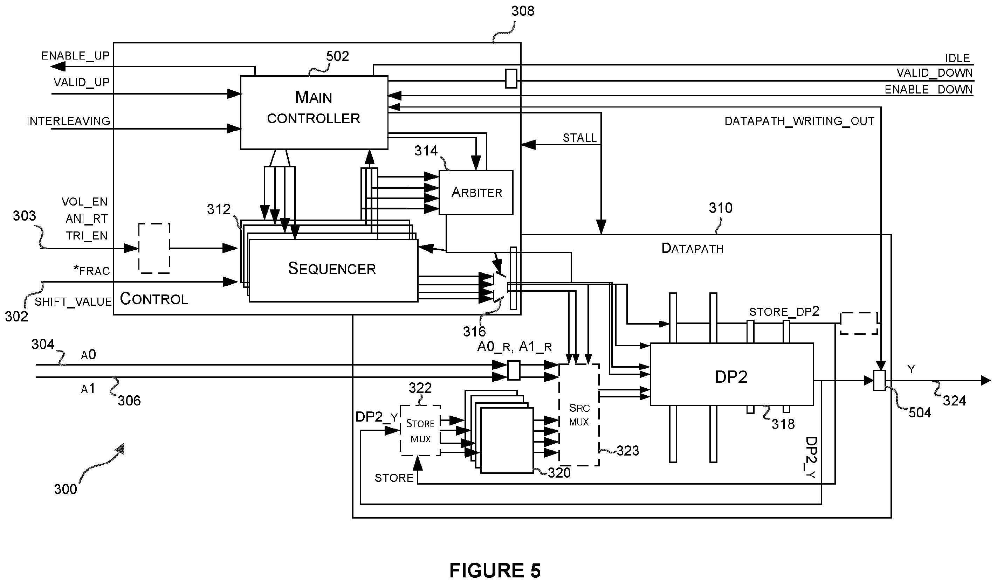

Figure 5 is a second illustration of the example texture filtering unit 300. In particular, Figure 5 is a more detailed illustration of the texturing filtering unit 300 shown in Figure 3. Compared to what is shown in Figure 3, Figure 5 shows additional signal flows (e.g. signals that enable the sequencers to indicate that they want an input, that that input is the last, when they are idle, stall signals, etc.) and register stages. Figure 5 also shows that the control block 308 comprises a main controller unit 502. In this example, the main controller 502 indicates when any of the sequencers 312 can start processing a filtering sequence (i.e. start a new sequence of texture filtering operations). Additionally the main controller unit 502 keeps track of the order in which sequencers are supposed to produce outputs and hence ensures that outputs are generated from the texture filtering unit 500 in the right order.

In the example shown in Figures 3 and 5, the datapath block 310 comprises only a single DP2 unit 318. In other examples, the datapath block 310 may comprise a different number and/or combination of computational logic blocks. In many examples, the resources within the datapath block 310 are limited, i.e. the total throughput of the hardware logic component(s) of the datapath block 310 is lower than what the sequencers 312 may request.

As described above, a sequencer may operate on a stream of input values or on interleaved streams of input values. Where interleaving is used, the input values that contribute to a single filtered output may not be received immediately following each other. The use of interleaved streams may be signalled to the texture filtering unit 300 using an additional enable (or control) signal 303:

| Enable signal | Possible values | Meaning |
|---|---|---|
| Interleaving | 0, 1, 2, 3 | As described below with reference to Figure 7, sequences of input values are received in sets. The number of sequences of input values in a set is one more than the value of the enable signal. Interleaving is disabled (i.e. there is one sequence of input values per set) when the interleaving enable signal is 0; whereas interleaving is enabled (i.e. there are multiple sequences of input values per set) when the interleaving enable signal is greater than 0. |

The interleaving of streams of input values (e.g. texture values) may be used where, for example, a plurality of texture values are accessed from memory at the same time (e.g. R and G values) but need to be filtered separately (e.g. where colour filtering is being performed separately for each colour channel). This can improve efficiency since the texture values for the different streams (e.g. RGBA) may be stored contiguously and by using interleaving, it avoids having to deserialize the texture values (which can be expensive for long sequences).

In the examples described above, the texture filtering unit 300 is arranged to implement any one or more of: volumetric, anisotropic and trilinear filtering. In further examples, the texture filtering unit may be arranged to implement any combination of volumetric, anisotropic, trilinear and bilinear filtering. In order to be able to implement bilinear filtering without significantly reducing final output rates, the number of inputs to the texture filtering unit configured to receive texture values (e.g. inputs 304, 306) may be increased and the number of computational hardware logic components in the datapath block may be increased.

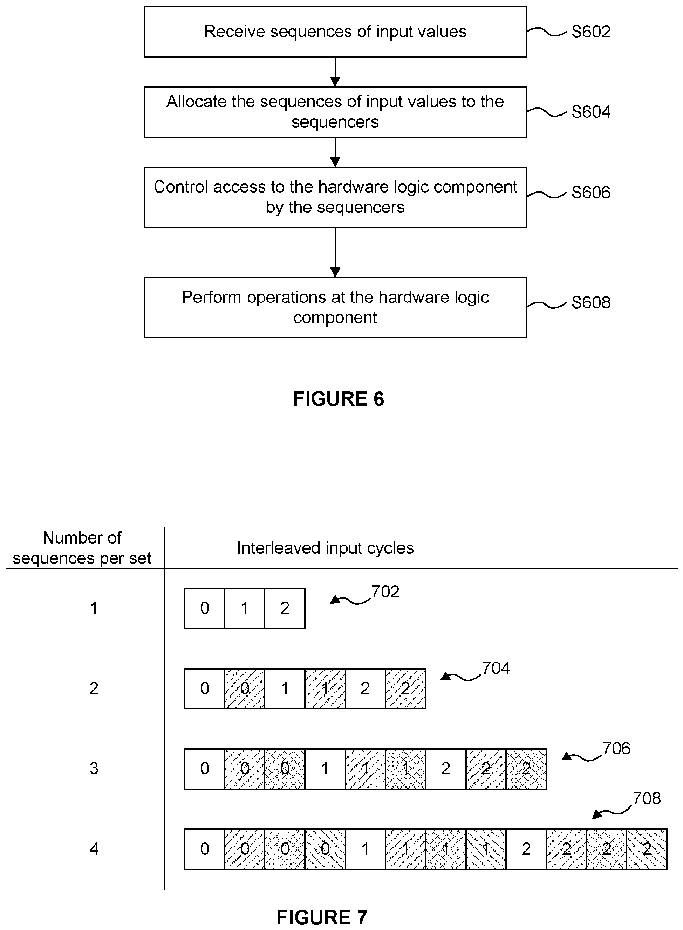

Figure 6 is a flow chart for a method of applying filtering to a plurality of sequences of input values to determine output values within the processing unit 300.

In step S602 the texture filtering unit 300 receives sequences of input values. The sequences of input values may be received from the bilinear interpolation unit 112, i.e. the input values may be results of bilinear interpolation having been performed on texture values by the bilinear interpolation unit 112. For example, in the volumetric filtering mode, the bilinear interpolation unit 112 may perform bilinear interpolation on the texel values $204_1$ to $204_4$ to determine the value $206_1$ and may perform bilinear interpolation on the texel values $204_5$ to $204_8$ to determine the value $206_2$, wherein the values $206_1$ and $206_2$ are the input values (304 and 306) provided to the texture filtering unit 300. As another example, in the trilinear filtering mode, the bilinear interpolation unit 112 may perform bilinear interpolation on texel values in the first mipmap level $216_1$ to determine the value $218_1$ and may perform bilinear interpolation on the texel values in the second mipmap level $216_2$ to determine the value $218_2$, wherein the values $218_1$ and $218_2$ are the input values (304 and 306) provided to the texture filtering unit 300. In other examples the input values 304 and 306 to the texture filtering unit 300 might not have been processed by the bilinear interpolation unit 112, e.g. the input values 304 and 306 may be texel values which have been fetched from memory 108.

The sequences of input values may be received in sets. The input values within a set are accessed from memory at the same time. For example, Figure 7 shows four different example sets of sequences of input values. In this example, two input values are received in an input cycle, and each sequence of input values shown in Figure 7 comprises six input values, i.e. which can be received in three input cycles. Each input cycle (i.e. each pair of input values) is represented with a box in the right hand column, where the number in the box indicates which input cycle the box represents for a particular sequence of input values. The different types of hatching are used to indicate different sequences of input values. Figure 7 shows a first set 702 which comprises one sequence of input values, a second set 704 which comprises two sequences of input values, a third set 706 which comprises three sequences of input values, and a fourth set 708 which comprises four sequences of input values. In each of the sets that include more than one sequence of input values (e.g. in sets 704, 706 and 708), the input cycles alternate between different sequences, i.e. such that a first input cycle (i.e. a first pair of input values) is received for each sequence in turn, and then a second input cycle (i.e. a second pair of input values) is received for each sequence in turn, and so on. In this way, the input values within a set are interleaved input values from the plurality of sequences of input values. Each sequence may represent a respective colour channel (e.g. a Red, Green, Blue or Alpha colour channel), and may be processed by a respective one of the sequencers 312. The number of sequences of input values within a set does not exceed the number of sequencers 312 in the control block 308.

In step S604 the control block 308 allocates each of the sequences of input values to one of the sequencers 312. For example, the sequences of input values may be allocated to the sequencers 312 in a round-robin manner. As described above, the sequencers 312 receive enable signals (vol_en, tri_en and ani_rt) to specify the filtering to be performed. Each of the sequencers 312 defines a sequence of operations of a texture filtering process to be performed in respect of the sequence of input values allocated to that sequencer. The same type of filtering is applied to the sequences of input values in a set. The sequencers also receive the filter coefficients (vfrac, afrac and tfrac) for the filtering operations as described above.

In step S606 the arbiter 314 controls access to the hardware logic component 318 of the datapath block 310 by the sequencers 312 according to prioritization rules. In particular, the arbiter 314 chooses which sequencer can access the hardware logic component 318.

In step S608 the hardware logic component 318 performs operations by processing values for the operations to generate results of the operations, e.g. as part of a texture filtering process. In each of a plurality of clock cycles, the hardware logic component 318 receives a plurality of values for an operation, and then the hardware logic component 318 processes the received values through a pipeline over a plurality of clock cycles to generate a result of the operation as part of the texture filtering process. Different operations can be at different stages of the pipeline at the same time. As described above, the results of the operations may be intermediate result values which can be stored in the scratchpad registers 320 for use in a subsequent operation, or the results of the operations may be output values which can be stored in the output register 504 and provided on the output 324 of the texture filtering unit 300. The 'plurality of clock cycles' over which the hardware logic component is configured to process the received values for an operation through the pipeline is a number of clock cycles (e.g. three) which is less than the number of sequencers in the control block (e.g. four).

In previous systems (e.g. as described in the UK patent GB2567507B) there were two levels of priority: high priority for input cycles, and low priority for non-input cycles, and in the case of ties the sequencer with the lowest index was chosen. However, the inventor of the present application has realised that having just two levels of priority can sometimes cause bubbles to appear in the work performed by the datapath block, i.e. it can cause cycles to occur where the hardware logic component 318 is not used by any of the sequencers 312, and there can also be irregular performance results. As described in more detail below, according to the present disclosure, the arbiter 314 uses three levels of priority to determine which of the sequencers 312 can access the hardware logic component 318. The extra level of priority can avoid the bubbles in the work performed by the datapath block 310, and also leads to more regular performance results. It is noted that the performance, and the occurrence of bubbles, is discussed herein under the following three assumptions: (i) new inputs are always ready after the previous inputs are read (i.e. there is no input stalling), and if all inputs for a set are received, the inputs of the next set are ready, (ii) outputs can be processed immediately (i.e. there is no output stalling), and (iii) the filtering mode (i.e. the combination of volumetric, anisotropic and trilinear filtering to be applied) and the number of sequences in a set stay constant for the examined duration. If one of the above assumptions is not met, the performance may be less than ideal; however, these assumptions are expected to hold over long periods in which the component is active.

As described above, the arbiter 314 uses three levels of priority (in addition to a zero priority which is used when the hardware logic component 318 is not needed). In particular, each operation to be performed by the hardware logic component 318 has a priority in accordance with the prioritization rules, wherein:

- Operations of a first set of operations have a high priority (which is referred to as priority level '3' below). The first set of operations comprises input operations which involve input values. For example, all input operations (i.e. all operations which involve input values) may be included in the first set of operations, and therefore given a high priority.

- Operations of a second set of operations have a medium priority (which is referred to as priority level '2' below). The second set of operations comprises intermediate operations which do not involve input values and which determine intermediate result values rather than determining output values.

- Operations of a third set of operations have a low priority (which is referred to as priority level '1' below). The third set of operations comprises output operations which determine output values. For example, all output operations (i.e. all operations which determine output values) which are not also input operations (i.e. which do not involve input values) may be included in the third set of operations, and therefore given a low priority.

In some examples, the second set of operations could include all intermediate operations (i.e. all operations which do not involve input values and which determine intermediate result values rather than determining output values).

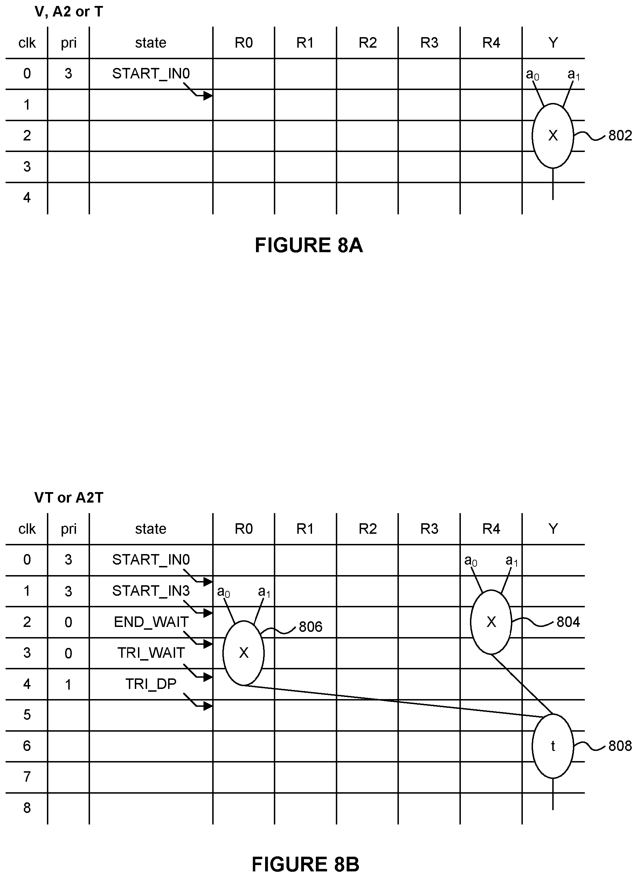

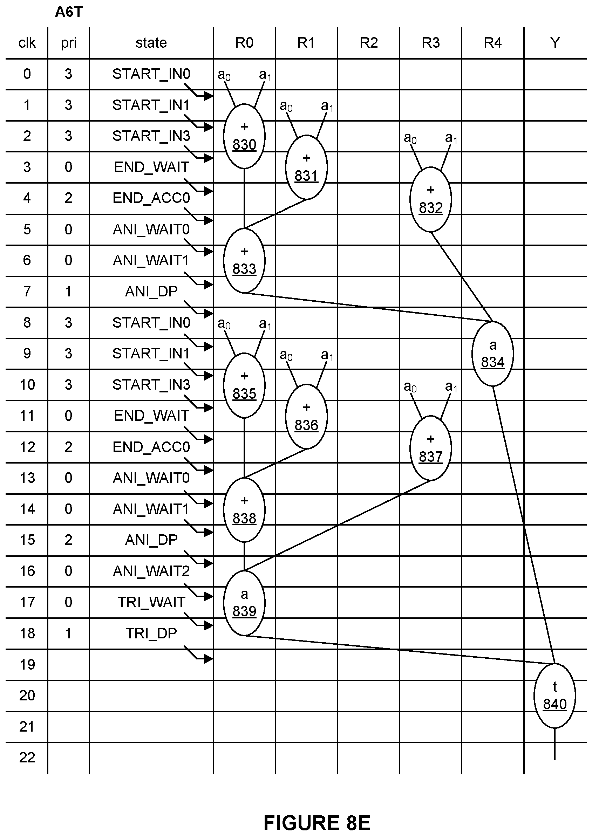

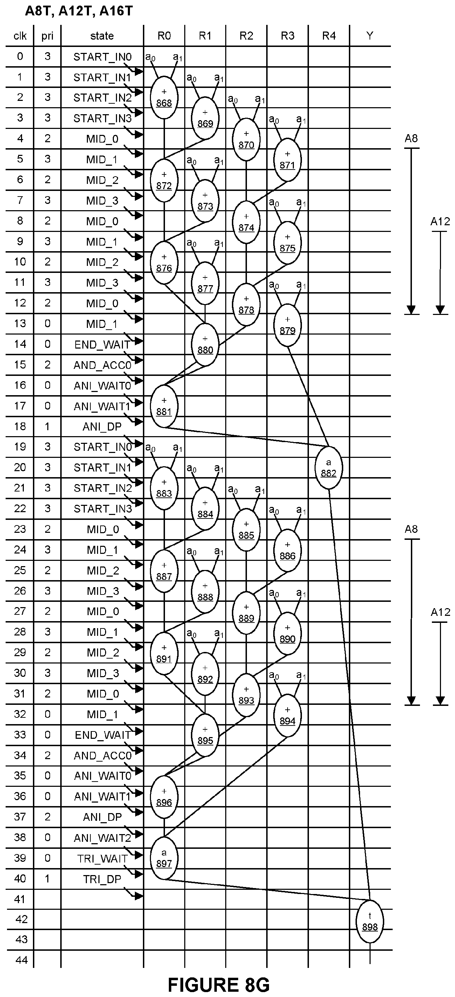

However, in the examples described in detail below, some intermediate operations are included in the third set of operations (and therefore have the low priority) rather than being included in the second set of operations. In particular, in the examples described in detail below, the third set of operations comprises all operations which do not involve input values and which accumulate values derived from all previously received input values for the sequence of operations. Operations can be considered to accumulate values derived from all previously received input values for a sequence of operations if information from all input values that have been received up to that point in the sequence is required to calculate those operations. In this way, the third set of operations includes all output operations which are not also input operations, and also includes the anisotropic dot-product operation at the end of a first set of anisotropic filtering operations when a filtering mode is being implemented which includes trilinear filtering and anisotropic filtering with an anisotropic ratio above a threshold value. For example, the threshold value may be two if volumetric filtering is being applied, and the threshold value may be four if volumetric filtering is not being applied. This is explained in more detail below with reference to the examples shown in Figures 8A to 8G (in particular the examples shown in Figures 8E and 8G which are examples in which trilinear filtering and anisotropic filtering with an anisotropic ratio above the threshold value are applied).

So according to the prioritization rules applied by the arbiter 314, operations that will produce an output are given a low priority (if they do not involve input values), most of the operations that will not produce an output and also do not need to process input values are given a medium priority, and operations that require input values are given the highest priority. As explained in the following paragraphs, differentiating between the low priority and medium priority operations helps to avoid bubbles in the work performed by the datapath block 310, and also leads to more regular performance results.

In particular, the final output DP2 operations from a plurality of sequences of operations are saved until the end so they can be performed together, thereby filling in each other's 'wait cycles'. This is useful because just before an output operation of a sequence is performed there are wait cycles. This is because the operations that produce the input values to the output operation need to be completed before the output operation can begin. For example, there may be at least two wait cycles (and often more than two wait cycles) before an output operation can be scheduled. While the operations that produce the input values for an output operation of a sequence are being performed, that sequence usually will not have any other operations to perform. So, to avoid bubbles, it is useful for there to be other work to perform in the other sequences while the operations producing the input values for the final output operation of the first sequence are performed. A neat way to ensure this is to save the output cycles from the different sequences until the end so that they can be performed together, thereby filling in the bubbles for each other. This also helps to keep the sequences in a set in sync with each other as they are processed, such that they finish together.

As can be seen in the examples shown in Figures 8A to 8G described below, all sequences of operations accumulate one or more cycles of input values into a single value, combining two input values or intermediate values at a time. These intermediate values are stored in a limited number of "scratchpad" registers (e.g. five scratchpad registers for each sequence of operations). The use of the scratchpad registers allows parallel processing of sequences with a large number of input cycles, in order to hide the latency of the hardware logic component 318 between dependent operations within a sequence of operations. For example, the hardware logic component 318 may be a DP2 unit which has a latency of three clock cycles, i.e. an operation takes three clock cycles to be performed by the DP unit 318. A value stored in a register is only used once by a later operation, and then can be overwritten by a different value. The final operation in a sequence sends its result directly to the output of the hardware logic component, not passing through the scratchpad registers. After the first four scratchpad registers have been filled (in a "START" phase), values from two registers are summed into one register in order to make space for the result of a new input cycle (this happens in "MID" phases of the sequences). During these two phases, the work within a sequence can be parallelised enough to hide the 3-cycle latency of the DP2 unit: by the time a DP2 result is required for a later DP2 operation, it is already available in the register. After these phases, no more input cycles are received.

In later phases of the sequences of operations (which are referred to as "END", "ANI" and "TRI" phases in the examples described below), DP2 operations are more sparse, and each value reduces the number of registers with unused values in them, until the final two are combined and an output is produced. Each operation can only start once both operations that produce its inputs are completed, and there are now not enough operations that can be performed in parallel to hide the latency of the DP2 unit. This means that the sequence must accommodate a number of "wait" cycles, to ensure the data being used is valid. It is noted that in filtering modes with large anisotropic ratios and trilinear filtering, the END and ANI phases appear twice, once after half of the input cycles have been received and once again at the end. There are multiple (e.g. four) sequencers 312 that can all run in parallel, so the DP2 unit 318 does not sit unused when one of the sequences has a wait cycle: instead, a sequence running on a different sequencer can fill the gap in the sequence that currently has the wait cycle.

The priorities assigned to operations as described above ensure that the DP2 unit is used in every cycle, as long as there is no input or output stalling and the filtering mode and set size do not change. In particular, if an input cycle is ready to be processed, that always takes priority. However, each input cycle belongs to only one sequence, so inputs may still need to be stalled if the next sequence to receive input samples is not yet ready to receive them. This means that only one sequencer at a time can have this highest priority (priority '3'). Most non-input cycles will have the medium priority (priority '2'), which means that it can be chosen as long as no sequencer has priority 3. In case there are multiple sequencers requesting that medium priority operations are processed, the first sequencer of the active set (the one receiving inputs) has the highest priority, followed by the next sequencer, then the one after that, then the one after that (for sequencer 3, the next sequencer is sequencer 0). The low priority (priority '1') is allocated to sequencers that need to perform a non-input operation that accumulates all previously received input values. What these cycles have in common with each other is that they appear at the end of a sparse part of the sequence; in other words, the preceding cycles contain many wait cycles, which need to be filled with cycles from other sequencers (in the same set or not) for the DP2 unit to be fully utilised, achieving maximum performance. If there are three or four sequences in each set, these wait cycles can be filled by operations from other sequencers in the same set. If there are only one or two sequences per set, the last few cycles of the set (all priorities '2' or '1') will be deferred while the next set starts processing its inputs, and finally get executed when the sequences in the next set reach a sparse section. This may be after the input samples of the first MIP MAP level have been received if there is a high anisotropic ratio, or it may be the end of the sequence. This makes use of the fact that there are no strict latency requirements on the operations, so the final operations can be deferred for quite some time. A limit to this is that at some point, all sequencers are used, and new inputs can only be processed by completing old sequences and freeing their sequencers.

As described above, in a filtering mode which includes trilinear filtering and anisotropic filtering with an anisotropic ratio above a threshold value, each of the sequencers defines a sequence of operations comprising: (i) a first set of anisotropic filtering operations in respect of a first mipmap level which ends with a dot product operation, (ii) a second set of anisotropic filtering operations in respect of a second mipmap level, and (iii) a trilinear interpolation operation which combines the result of the first set of anisotropic filtering operations with the result of the second set of anisotropic filtering operations to determine an output value for the sequence of operations. Examples of these filtering modes are shown in Figures 8E and 8G described below. In these examples, the dot product operation at the end of the first set of anisotropic filtering operations is in the third set of operations (i.e. it is given the low priority, even though it is not an output operation, i.e. even though it does not determine an output value). In these filtering modes, all of the intermediate operations which are not dot product operations at the end of a first set of anisotropic filtering operations are in the second set of operations (i.e. they have the medium priority). Giving the first anisotropic dot product operation the low priority in these filtering modes helps to synchronise sequences of operations from different sequencers at the point of the operation that comes in the middle of the anisotropic + trilinear filtering sequences of operations. This prevents the sequencers from getting out of sync with each other, i.e. it prevents one sequencer from starting to process the second half of its inputs while other sequencers were blocked in the first half. Getting out of sync in this way would harm the overall performance of the texture filtering unit. This is because if one sequence lags too much behind the others, it may need to "catch up" while there are no other operations to hide its wait cycles, leading to wasted cycles during which the DP2 unit 318 is idle.

As described above, in step S606, the arbiter 314 controls access to the hardware logic component 318 of the datapath block 310 by the sequencers 312. The arbiter 314 does this by receiving requests from the sequencers 312 identifying operations to be performed by the hardware logic component 318 of the datapath block 310, and comparing the priorities of operations identified by the requests to determine which of the identified operations is to be sent to the hardware logic component 318 of the datapath block 310 next. In particular, the arbiter 314 determines which of the identified operations has a highest priority of the identified operations. If a single one of the identified operations is determined to have the highest priority of the identified operations, the arbiter 314 causes that one of the identified operations to be sent to the hardware logic component 318 of the datapath block 310 next (by controlling the multiplexers 316, 323 accordingly). If a plurality of the identified operations are determined to have the highest priority of the identified operations, the arbiter 314 determines which of the plurality of the identified operations is to be sent to the hardware logic component 318 of the datapath block 310 next in accordance with a tie-breaking scheme.

The tie-breaking scheme orders the sequencers (e.g. in a round-robin manner) starting from a base sequencer. The arbiter 314 is configured to determine which of the plurality of identified operations that are determined to have the highest priority of the identified operations was requested by a sequencer that, according to the ordering of the sequencers in the tie-breaking scheme, is the first of the sequencers that requested the plurality of identified operations that are determined to have the highest priority. In this way, in the case of a tie in priority of DP2 operations that are ready to be sent to the DP2 unit 318 for processing, the arbiter 314 starts from the base sequencer, where the "base sequencer" is the first sequencer in the set that still needs to receive inputs. Until all of the sequencers 312 have had all of the input operations in their sequences of operations sent for processing by the hardware logic component 318, the base sequencer is one of the sequencers 312 that has not yet had all of the input operations in its sequence of operations sent for processing by the hardware logic component 318. In response to determining that a final input operation of the sequence of operations requested by the sequencer that is currently the base sequencer has been sent to the hardware logic component 318, the arbiter 314 updates an indication of which of the sequencers is currently the base sequencer such that, if possible, the base sequencer is a sequencer that has not yet had all of the input operations in its sequence of operations sent for processing by the hardware logic component 318. A result of this is that when one sequencer has stopped having its inputs processed by the hardware logic component then other sequencers can start having their inputs processed by the hardware logic component.

For example, the indication of which of the sequencers is the base sequencer can be incremented by 1 every time a sequencer receives its final input cycle. For example, a set may include 4 sequences, which are allocated to sequencers 1, 2, 3 and 4 respectively. In this example, until the first sequencer receives its final input cycle, the 'base sequencer' is sequencer 1. When the first sequencer has received its final input cycle then the base sequencer is updated to be sequencer 2. When the second sequencer has received its final input cycle then the base sequencer is updated to be sequencer 3. When the third sequencer has received its final input cycle then the base sequencer is updated to be sequencer 4. In this way, in the event of ties, operations for the base sequencer are prioritised, and as the 'base sequencer' changes, this prioritises sequencers which still need to receive an input cycle (and it is noted that those input cycles will be high priority), so it is ensured that all sequencers can receive all of their input cycles quickly. Using the base sequencer as described above in order to resolve ties in priority improves the performance of the texturing filtering unit 300 compared to using a fixed order of the sequencers to resolve the ties, i.e. compared to giving precedence to the sequence running on sequencer 0, then sequencer 1, then sequencer 2, then sequencer 3.

As described above, the datapath block 310 comprises a set of scratchpad registers 320 for each of the sequencers, wherein the set of scratchpad registers for a sequencer is arranged to store intermediate result values generated by the hardware logic component 318 when performing an operation in the sequence of operations defined by that sequencer. The sequencers 312 determine, for each intermediate result value generated by the hardware logic component 318, a destination location in one of the scratchpad registers 320 for storing the intermediate result value. The intermediate result values can be provided from the scratchpad registers 320 to the hardware logic component 318. The hardware logic component 318 comprises a first input and a second input so that it can receive two values in a single clock cycle. In each clock cycle, each input of the hardware logic component may receive a value from one of the scratchpad registers or an input value. In previous systems (e.g. as described in the UK patent GB2567507B) all of the scratchpad registers (e.g. 20 registers) could provide input data to both of the inputs of a hardware logic component, and the systems required multiplexing logic that would allow all of the scratchpad registers to be connected to both inputs of the hardware logic component.

The inventor of the present application has realised that the multiplexing logic can take up a significant amount of area. It is desirable to reduce the area of the texture filtering logic 300. Therefore, in the datapath block 310, it may be the case that each of the scratchpad registers can provide data to only one of the inputs of the hardware logic component 318. For example, the set of scratchpad registers 320 for a sequencer may comprise: (i) a first subset of scratchpad registers which are configured to provide values to the first input of the hardware logic component but not to the second input of the hardware logic component; and (ii) a second subset of scratchpad registers which are configured to provide values to the second input of the hardware logic component but not to the first input of the hardware logic component. This significantly reduces the area used for the multiplexing, i.e. it limits the physical connections that are needed between the scratchpad registers and the hardware logic component. For example, the set of scratchpad registers 320 for each of the sequencers may comprise five scratchpad registers (R0, R1, R2, R3 and R4), and the first subset of scratchpad registers for a sequencer comprises two scratchpad registers (e.g. registers R0 and R2) and the second subset of scratchpad registers for the sequencer comprises three scratchpad registers (e.g. registers R1, R3 and R4).

The multiplexing logic 323 is configured to receive values from the scratchpad registers 320, receive input values (304, 306), and output values to the first and second inputs of the hardware logic component 318. The arbiter 314 uses the multiplexing logic 323 to control which values are provided to the first and second inputs of the hardware logic component 318 in each of a plurality of clock cycles.

The FSM of the sequencers 312 ensures that the intermediate results are stored in appropriate registers so that they can be provided to the correct inputs of the hardware logic component 318 when they are subsequently used. In particular, the sequencers 312 are configured such that, if two intermediate result values are to be used together in a subsequent operation on the hardware logic component, a first of the two intermediate result values is stored in a scratchpad register of the first subset of scratchpad registers (e.g. R0 or R2) and a second of the two intermediate result values is stored in a scratchpad register of the second subset of scratchpad registers (e.g. R1, R3 or R4).

The datapath block 310 does not comprise a dedicated addition unit. For example, the hardware logic component 318 may be a two-dimensional dot product (DP2) unit 318, and the datapath block 310 may be configured to perform addition operations using the DP2 unit by setting coefficients of the DP2 unit to have a value of 1. It may be slightly less efficient to perform an addition operation using a DP2 unit compared to using a dedicated addition unit, but by avoiding including a dedicated addition unit in the datapath block 310 the area of the texture filtering unit 300 can be significantly reduced. In particular, a dedicated addition unit would only be used by the texture filtering unit 300 in filtering modes with high anisotropic ratios (4 or higher) which are of low concern in terms of performance because they are rarely used in practice. As such the benefit that is achieved by not including a dedicated addition unit in terms of the area reduction (e.g. a 10% reduction in the area of the texturing filtering unit 300) outweighs the slight reduction in performance for the filtering modes with high anisotropic ratios (4 or higher).

In examples described above, the hardware logic component 318 is a DP unit. More generally, the hardware logic component could for example be any module that performs an operation combining two values and outputting one value of the same format, such as a 2-input adder, or a multiplier.

Furthermore, the techniques described above in the context of texture filtering within a GPU (in which the input values are input texture values and the output values are output texture values) may also be used for other applications that involve floating-point operations comprising evaluation of a plurality of sum-of-products (SOPs) followed by an accumulation stage. In such examples, the texture filtering unit described above may instead be referred to as a computation unit and the filter coefficients may instead be replaced by SOP coefficients. Examples of other applications include coordinate transformations, depth calculations and some common shader calculations.

Figures 8A to 8G show example timing diagrams in different example filtering modes, illustrating the registers that are used for storing results from performing the operations of the sequences of operations in the different filtering modes.

In particular, Figure 8A illustrates a timing diagram in a filtering mode which implements one of volumetric filtering (V), anisotropic filtering with an anisotropic ratio of 2 (A2) ortrilinear filtering (T). In these filtering modes the sequences of operations include just one input cycle. Figure 8A shows just one operation 802 that is performed for a sequence of operations. Operation 802 receives input values (denoted $a_0$ and $a_1$) and as such is an 'input operation' and has a high priority (i.e. a priority of '3'). Operation 802 is scheduled in clock cycle 0, starts being performed by the DP2 unit 318 in clock cycle 1 and finishes being performed in clock cycle 3. Operation 802 is shown in the column for the output register 'Y' because the result of operation 802 is stored in the output register (which adds one cycle of latency, shown as the line extending from the operation. The 'X' shown for the operation 802 indicates a volumetric filtering operation (in the V filtering mode), an anisotropic filtering operation (in the A2 filtering mode) or a trilinear filtering operation (in the T filtering mode).

Figure 8B illustrates a timing diagram in a filtering mode which implements one of volumetric and trilinear filtering (VT), or anisotropic filtering with an anisotropic ratio of 2 and trilinear filtering (A2T). In these filtering modes the sequences of operations include two input cycles. Figure 8B shows three operations 804, 806 and 808 that are performed for a sequence of operations. Operations 804 and 806 receive input values and as such are 'input operations' and have a high priority (i.e. a priority of '3'). Operation 804 is scheduled in clock cycle 0, starts being performed by the DP2 unit 318 in clock cycle 1 and finishes being performed in clock cycle 3, with its result being stored in register R4. Operation 806 is scheduled in clock cycle 1, starts being performed by the DP2 unit 318 in clock cycle 2 and finishes being performed in clock cycle 4, with its result being stored in register R0. Operation 808 receives the values determined by operations 804 and 806 from registers R4 and R0 (where it is noted that registers R0 and R4 can provide values to different inputs of the DP2 unit 318 as described above). Operation 808 does not involve any input values and determines an output value so it has a low priority (i.e. a priority of '1'). Operation 808 is scheduled in clock cycle 4, starts being performed by the DP2 unit 318 in clock cycle 5 and finishes being performed in clock cycle 7, with its result being stored in the output register Y.

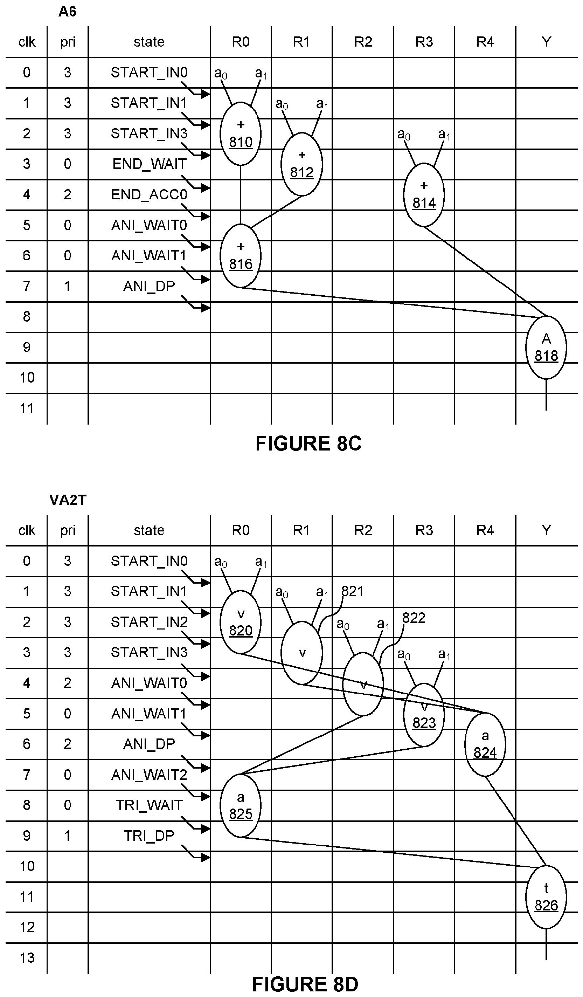

Figure 8C illustrates a timing diagram in a filtering mode which implements anisotropic filtering with an anisotropic ratio of 6 (A6). In this filtering mode the sequences of operations include three input cycles. Figure 8C shows five operations 810 to 818 that are performed for a sequence of operations. Operations 810, 812 and 814 receive input values and as such are 'input operations' and have a high priority (i.e. a priority of '3'). Operation 810 is scheduled in clock cycle 0, starts being performed by the DP2 unit 318 in clock cycle 1 and finishes being performed in clock cycle 3, with its result being stored in register R0. Operation 812 is scheduled in clock cycle 1, starts being performed by the DP2 unit 318 in clock cycle 2 and finishes being performed in clock cycle 4, with its result being stored in register R1. Operation 814 is scheduled in clock cycle 2, starts being performed by the DP2 unit 318 in clock cycle 3 and finishes being performed in clock cycle 5, with its result being stored in register R3. Operation 816 receives the values determined by operations 810 and 812 from registers R0 and R1 (where it is noted that registers R0 and R1 can provide values to different inputs of the DP2 unit 318 as described above). Operation 816 does not involve any input values and does not determine an output value so it has a medium priority (i.e. a priority of '2'). Operation 816 is scheduled in clock cycle 4, starts being performed by the DP2 unit 318 in clock cycle 5 and finishes being performed in clock cycle 7, with its result being stored in register R0. Operation 818 receives the values determined by operations 816 and 814 from registers R0 and R3 (where it is noted that registers R0 and R3 can provide values to different inputs of the DP2 unit 318 as described above). Operation 818 does not involve any input values and determines an output value so it has a low priority (i.e. a priority of '1'). Operation 818 is scheduled in clock cycle 7, starts being performed by the DP2 unit 318 in clock cycle 8 and finishes being performed in clock cycle 10, with its result being stored in the output register Y.

Figure 8D illustrates a timing diagram in a filtering mode which implements volumetric filtering, anisotropic filtering with an anisotropic ratio of 2 and trilinear filtering (VA2T). In this filtering mode the sequences of operations include four input cycles. Figure 8D shows seven operations 820 to 826 that are performed for a sequence of operations. Operations 820, 821, 822 and 823 receive input values and as such are 'input operations' and have a high priority (i.e. a priority of '3'). Operation 820 is a volumetric interpolation operation and is scheduled in clock cycle 0, starts being performed by the DP2 unit 318 in clock cycle 1 and finishes being performed in clock cycle 3, with its result being stored in register R0. Operation 821 is a volumetric interpolation operation and is scheduled in clock cycle 1, starts being performed by the DP2 unit 318 in clock cycle 2 and finishes being performed in clock cycle 4, with its result being stored in register R1.

Operation 822 is a volumetric interpolation operation and is scheduled in clock cycle 2, starts being performed by the DP2 unit 318 in clock cycle 3 and finishes being performed in clock cycle 5, with its result being stored in register R2. Operation 823 is a volumetric interpolation operation and is scheduled in clock cycle 3, starts being performed by the DP2 unit 318 in clock cycle 4 and finishes being performed in clock cycle 6, with its result being stored in register R3. Operation 824 is an anisotropic dot product operation and receives the values determined by operations 820 and 821 from registers R0 and R1 (where it is noted that registers R0 and R1 can provide values to different inputs of the DP2 unit 318 as described above). Operation 824 does not involve any input values and does not determine an output value so it has a medium priority (i.e. a priority of '2'). Operation 824 is scheduled in clock cycle 4, starts being performed by the DP2 unit 318 in clock cycle 5 and finishes being performed in clock cycle 7, with its result being stored in register R4. Operation 825 is an anisotropic dot product operation and receives the values determined by operations 822 and 823 from registers R2 and R3 (where it is noted that registers R2 and R3 can provide values to different inputs of the DP2 unit 318 as described above). Operation 825 does not involve any input values and does not determine an output value so it has a medium priority (i.e. a priority of '2'). Operation 825 is scheduled in clock cycle 6, starts being performed by the DP2 unit 318 in clock cycle 7 and finishes being performed in clock cycle 9, with its result being stored in register R0. Operation 826 is a trilinear interpolation operation and receives the values determined by operations 824 and 825 from registers R4 and R0 (where it is noted that registers R4 and R0 can provide values to different inputs of the DP2 unit 318 as described above). Operation 826 does not involve any input values and determines an output value so it has a low priority (i.e. a priority of '1'). Operation 826 is scheduled in clock cycle 9, starts being performed by the DP2 unit 318 in clock cycle 10 and finishes being performed in clock cycle 12, with its result being stored in the output register Y.

Figure 8E illustrates a timing diagram in a filtering mode which implements anisotropic filtering with an anisotropic ratio of 6 and trilinear filtering (A6T). It is noted that the example shown in Figure 8E is similar to the example shown in Figure 8C but additionally includes trilinear filtering. In this filtering mode the sequences of operations include six input cycles. Figure 8E shows eleven operations 830 to 840 that are performed for a sequence of operations. Operations 830, 831 and 832 receive input values and as such are 'input operations' and have a high priority (i.e. a priority of '3'). Operation 830 is scheduled in clock cycle 0, starts being performed by the DP2 unit 318 in clock cycle 1 and finishes being performed in clock cycle 3, with its result being stored in register R0. Operation 831 is scheduled in clock cycle 1, starts being performed by the DP2 unit 318 in clock cycle 2 and finishes being performed in clock cycle 4, with its result being stored in register R1. Operation 832 is scheduled in clock cycle 2, starts being performed by the DP2 unit 318 in clock cycle 3 and finishes being performed in clock cycle 5, with its result being stored in register R3. Operation 833 receives the values determined by operations 830 and 831 from registers R0 and R1 (where it is noted that registers R0 and R1 can provide values to different inputs of the DP2 unit 318 as described above). Operation 833 does not involve any input values and does not determine an output value so it has a medium priority (i.e. a priority of '2'). Operation 833 is scheduled in clock cycle 4, starts being performed by the DP2 unit 318 in clock cycle 5 and finishes being performed in clock cycle 7, with its result being stored in register R0. Operation 834 receives the values determined by operations 832 and 833 from registers R3 and R0 (where it is noted that registers R0 and R3 can provide values to different inputs of the DP2 unit 318 as described above). Operation 834 does not involve any input values and it is the first anisotropic dot product operation in a filtering mode that includes trilinear filtering and anisotropic filtering with an anisotropic ratio above the threshold value, so it has a low priority (i.e. a priority of '1'). Operation 834 is scheduled in clock cycle 7, starts being performed by the DP2 unit 318 in clock cycle 8 and finishes being performed in clock cycle 10, with its result being stored in register R4.

Operations 835, 836 and 837 receive input values and as such are 'input operations' and have a high priority (i.e. a priority of '3'). Operation 835 is scheduled in clock cycle 8, starts being performed by the DP2 unit 318 in clock cycle 9 and finishes being performed in clock cycle 11, with its result being stored in register R0. Operation 836 is scheduled in clock cycle 9, starts being performed by the DP2 unit 318 in clock cycle 10 and finishes being performed in clock cycle 12, with its result being stored in register R1. Operation 837 is scheduled in clock cycle 10, starts being performed by the DP2 unit 318 in clock cycle 11 and finishes being performed in clock cycle 13, with its result being stored in register R3. Operation 838 receives the values determined by operations 835 and 836 from registers R0 and R1 (where it is noted that registers R0 and R1 can provide values to different inputs of the DP2 unit 318 as described above). Operation 838 does not involve any input values and does not determine an output value so it has a medium priority (i.e. a priority of '2'). Operation 838 is scheduled in clock cycle 12, starts being performed by the DP2 unit 318 in clock cycle 13 and finishes being performed in clock cycle 15, with its result being stored in register R0. Operation 839 receives the values determined by operations 837 and 838 from registers R3 and R0 (where it is noted that registers R0 and R3 can provide values to different inputs of the DP2 unit 318 as described above). Operation 839 does not involve any input values and does not determine an output value so it has a medium priority (i.e. a priority of '2'). Operation 839 is scheduled in clock cycle 15, starts being performed by the DP2 unit 318 in clock cycle 16 and finishes being performed in clock cycle 18, with its result being stored in register R0. Operation 840 is a trilinear interpolation operation and receives the values determined by operations 834 and 839 from registers R4 and R0 (where it is noted that registers R4 and R0 can provide values to different inputs of the DP2 unit 318 as described above). Operation 840 does not involve any input values and determines an output value so it has a low priority (i.e. a priority of '1'). Operation 840 is scheduled in clock cycle 18, starts being performed by the DP2 unit 318 in clock cycle 19 and finishes being performed in clock cycle 21, with its result being stored in the output register Y.

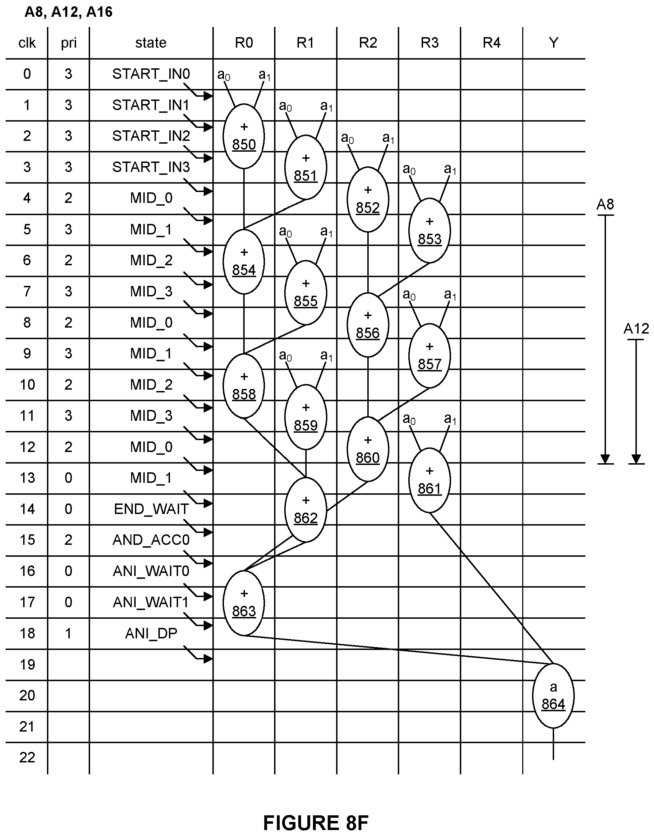

Figure 8F illustrates a timing diagram in a filtering mode which implements anisotropic filtering with an anisotropic ratio of 8, 12 or 16 (A8, A12, A16). In this filtering mode the sequences of operations include four, six or eight input cycles. Figure 8F shows fifteen operations 850 to 864 that are performed for a sequence of operations. Operations 850, 851, 852 and 853 receive input values and as such are 'input operations' and have a high priority (i.e. a priority of '3'). Operation 850 is an anisotropic addition operation and is scheduled in clock cycle 0, starts being performed by the DP2 unit 318 in clock cycle 1 and finishes being performed in clock cycle 3, with its result being stored in register R0. Operation 851 is an anisotropic addition operation and is scheduled in clock cycle 1, starts being performed by the DP2 unit 318 in clock cycle 2 and finishes being performed in clock cycle 4, with its result being stored in register R1. Operation 852 is an anisotropic addition operation and is scheduled in clock cycle 2, starts being performed by the DP2 unit 318 in clock cycle 3 and finishes being performed in clock cycle 5, with its result being stored in register R2. Operation 853 is an anisotropic addition operation and is scheduled in clock cycle 3, starts being performed by the DP2 unit 318 in clock cycle 4 and finishes being performed in clock cycle 6, with its result being stored in register R3. In a filtering mode which implements anisotropic filtering with an anisotropic ratio of 8 the process jumps from what is shown in Figure 8F as clock cycle 4 to clock cycle 13; whereas in filtering modes which implement anisotropic filtering with an anisotropic ratio of 12 or 16 the process carries on from clock cycle 4 to clock cycle 5.

Operation 854 is an anisotropic addition operation and receives the values determined by operations 850 and 851 from registers R0 and R1 (where it is noted that registers R0 and R1 can provide values to different inputs of the DP2 unit 318 as described above). Operation 854 does not involve any input values and does not determine an output value so it has a medium priority (i.e. a priority of '2'). Operation 854 is scheduled in clock cycle 4, starts being performed by the DP2 unit 318 in clock cycle 5 and finishes being performed in clock cycle 7, with its result being stored in register R0. Operation 855 receives input values and as such is an input operation and has a high priority (i.e. a priority of '3'). Operation 855 is an anisotropic addition operation and is scheduled in clock cycle 5, starts being performed by the DP2 unit 318 in clock cycle 6 and finishes being performed in clock cycle 8, with its result being stored in register R1. Operation 856 is an anisotropic addition operation and receives the values determined by operations 852 and 853 from registers R2 and R3 (where it is noted that registers R2 and R3 can provide values to different inputs of the DP2 unit 318 as described above). Operation 856 does not involve any input values and does not determine an output value so it has a medium priority (i.e. a priority of '2'). Operation 856 is scheduled in clock cycle 6, starts being performed by the DP2 unit 318 in clock cycle 7 and finishes being performed in clock cycle 9, with its result being stored in register R2. Operation 857 receives input values and as such is an input operation and has a high priority (i.e. a priority of '3'). Operation 857 is an anisotropic addition operation and is scheduled in clock cycle 7, starts being performed by the DP2 unit 318 in clock cycle 8 and finishes being performed in clock cycle 10, with its result being stored in register R3. In a filtering mode which implements anisotropic filtering with an anisotropic ratio of 12 the process jumps from what is shown in Figure 8F as clock cycle 8 to clock cycle 13; whereas in a filtering mode which implements anisotropic filtering with an anisotropic ratio of 16 the process carries on from clock cycle 8 to clock cycle 9.

Operation 858 is an anisotropic addition operation and receives the values determined by operations 854 and 855 from registers R0 and R1 (where it is noted that registers R0 and R1 can provide values to different inputs of the DP2 unit 318 as described above). Operation 858 does not involve any input values and does not determine an output value so it has a medium priority (i.e. a priority of '2'). Operation 858 is scheduled in clock cycle 8, starts being performed by the DP2 unit 318 in clock cycle 9 and finishes being performed in clock cycle 11, with its result being stored in register R0. Operation 859 receives input values and as such is an input operation and has a high priority (i.e. a priority of '3'). Operation 859 is an anisotropic addition operation and is scheduled in clock cycle 9, starts being performed by the DP2 unit 318 in clock cycle 10 and finishes being performed in clock cycle 12, with its result being stored in register R1. Operation 860 is an anisotropic addition operation and receives the values determined by operations 856 and 857 from registers R2 and R3 (where it is noted that registers R2 and R3 can provide values to different inputs of the DP2 unit 318 as described above). Operation 860 does not involve any input values and does not determine an output value so it has a medium priority (i.e. a priority of '2'). Operation 860 is scheduled in clock cycle 10, starts being performed by the DP2 unit 318 in clock cycle 11 and finishes being performed in clock cycle 13, with its result being stored in register R2. Operation 861 receives input values and as such is an input operation and has a high priority (i.e. a priority of '3'). Operation 861 is an anisotropic addition operation and is scheduled in clock cycle 11, starts being performed by the DP2 unit 318 in clock cycle 12 and finishes being performed in clock cycle 14, with its result being stored in register R3.

Operation 862 is an anisotropic addition operation and receives the values from registers R0 and R1 (which were determined by operations 850 and 851 in a mode with an anisotropic ratio of 8, which were determined by operations 854 and 855 in a mode with an anisotropic ratio of 12, and which were determined by operations 858 and 859 in a mode with an anisotropic ratio of 16). It is noted that registers R0 and R1 can provide values to different inputs of the DP2 unit 318 as described above. Operation 862 does not involve any input values and does not determine an output value so it has a medium priority (i.e. a priority of '2'). Operation 862 is scheduled in clock cycle 12, starts being performed by the DP2 unit 318 in clock cycle 13 and finishes being performed in clock cycle 15, with its result being stored in register R1. Operation 863 is an anisotropic addition operation and receives the values from registers R1 and R2 (where it is noted that registers R1 and R2 can provide values to different inputs of the DP2 unit 318 as described above). The value from register R1 was determined by operation 862. The value from register R2 was determined by operation 852 in a mode with an anisotropic ratio of 8, was determined by operation 856 in a mode with an anisotropic ratio of 12, and was determined by operation 860 in a mode with an anisotropic ratio of 16. Operation 863 does not involve any input values and does not determine an output value so it has a medium priority (i.e. a priority of '2'). Operation 863 is scheduled in clock cycle 15, starts being performed by the DP2 unit 318 in clock cycle 16 and finishes being performed in clock cycle 18, with its result being stored in register R0. Operation 864 is an anisotropic dot product operation and receives the values from registers R0 and R3 (where it is noted that registers R0 and R3 can provide values to different inputs of the DP2 unit 318 as described above). The value from register R0 was determined by operation 863. The value from register R3 was determined by operation 853 in a mode with an anisotropic ratio of 8, was determined by operation 857 in a mode with an anisotropic ratio of 12, and was determined by operation 861 in a mode with an anisotropic ratio of 16. Operation 864 does not involve any input values and determines an output value so it has a low priority (i.e. a priority of '1'). Operation 864 is scheduled in clock cycle 18, starts being performed by the DP2 unit 318 in clock cycle 19 and finishes being performed in clock cycle 21, with its result being stored in the output register Y.

It is worth noting that the result of operation 862 is stored in register R1 (not in register R0). This is because the next operation (i.e. operation 863) needs to take this intermediate result and the intermediate result in register R2. Since R0 and R2 are connected to the same input of the DP2 unit 318, if the result of operation 862 had been stored in register R0 then operation 863 would not have been able to receive the values that it needs. This is solved by storing the result of operation 862 in register R1, such that operation 863 can receive the values that it needs because registers R1 and R2 are connected to different inputs of the DP2 unit 318.

Figure 8G illustrates a timing diagram in a filtering mode which implements trilinear filtering and anisotropic filtering with an anisotropic ratio of 8, 12 or 16 (A8T, A12T, A16T). It is noted that the example shown in Figure 8G is similar to the example shown in Figure 8F but additionally includes trilinear filtering. In this filtering mode the sequences of operations include eight, twelve or sixteen input cycles. Figure 8G shows 31 operations 868 to 898 that are performed for a sequence of operations. For conciseness, a full description of all of the operations shown in Figure 8G is not provided herein. Instead it is noted that operations 868 to 882 relate to a first half of the trilinear filtering, which is performed for a first mipmap level. Operations 868 to 881 are the same as operations 850 to 863 shown in Figure 8F. Operation 882 is an anisotropic dot product operation and receives the values from registers R0 and R3 (where it is noted that registers R0 and R3 can provide values to different inputs of the DP2 unit 318 as described above). The value from register R0 was determined by operation 881. The value from register R3 was determined by operation 871 in a mode with an anisotropic ratio of 8, was determined by operation 875 in a mode with an anisotropic ratio of 12, and was determined by operation 879 in a mode with an anisotropic ratio of 16. Operation 882 does not involve any input values and it is the first anisotropic dot product operation in a filtering mode that includes trilinear filtering and anisotropic filtering with an anisotropic ratio above the threshold value, so it has a low priority (i.e. a priority of '1'). Operation 882 is scheduled in clock cycle 18, starts being performed by the DP2 unit 318 in clock cycle 19 and finishes being performed in clock cycle 21, with its result being stored in register R4.

Operations 883 to 897 relate to a second half of the trilinear filtering, which is performed for a second mipmap level. Operations 883 to 896 are the same as operations 850 to 863 shown in Figure 8F (and the same as operations 868 to 881 shown in Figure 8G). Operation 897 is an anisotropic dot product operation and receives the values from registers R0 and R3 (where it is noted that registers R0 and R3 can provide values to different inputs of the DP2 unit 318 as described above). The value from register R0 was determined by operation 896. The value from register R3 was determined by operation 886 in a mode with an anisotropic ratio of 8, was determined by operation 890 in a mode with an anisotropic ratio of 12, and was determined by operation 894 in a mode with an anisotropic ratio of 16. Operation 897 does not involve any input values and does not determine an output value so it has a medium priority (i.e. a priority of '2'). Operation 897 is scheduled in clock cycle 37, starts being performed by the DP2 unit 318 in clock cycle 38 and finishes being performed in clock cycle 40, with its result being stored in register R0. Operation 898 is a trilinear interpolation operation and receives the values determined by operations 882 and 897 from registers R4 and R0 (where it is noted that registers R4 and R0 can provide values to different inputs of the DP2 unit 318 as described above). Operation 898 does not involve any input values and determines an output value so it has a low priority (i.e. a priority of '1'). Operation 898 is scheduled in clock cycle 40, starts being performed by the DP2 unit 318 in clock cycle 41 and finishes being performed in clock cycle 43, with its result being stored in the output register Y.

The timing diagrams shown in Figures 8A to 8G show just some of the example filtering modes that could be implemented. In other examples, other filtering modes could be used.

The examples described in detail herein relate to a texture filtering unit configured to perform a texture filtering process. However, it is to be understood that the texture filtering unit is an example of a filtering unit and the texture filtering process is an example of a filtering process, and in other examples the same principles described herein in the context of texture filtering can be applied to other types of filtering. For example, the techniques described herein could be applied for image filtering, e.g. for purposes such as blurring, sharpening and noise reduction. Image filtering often involves applying a weighted sum to a set of pixel values (e.g. colour values), which is very similar to the anisotropic mode described above in relation to texture filtering, although with different weights. Another example of image filtering in which the techniques described herein could be applied is in a convolution kernel, for example as part of a convolutional neural network. This again involves a weighted average that is applied to pixel values (e.g. colour values), but this time as part of a neural network. The techniques described herein could also be applied to 'non-image' filtering, e.g. any other linear filtering (i.e. filtering that can be represented as a weighted sum). For example, a Fast Fourier Transform (FFT) falls under this category, which is useful for many applications where a (usually) time series such as from an audio signal can be transformed into a frequency representation, and the techniques described herein can be used in these examples too.

Furthermore, although the examples described in detail herein relate to implementing texture filtering within a rasterisation system, the same texture filtering techniques could be implemented in other rendering systems, e.g. in a ray tracing system. For example, in a ray tracing system, when a ray has been found to intersect a primitive at an intersection point then a texture can be sampled and filtered as described herein in order to determine a colour value for the intersection.

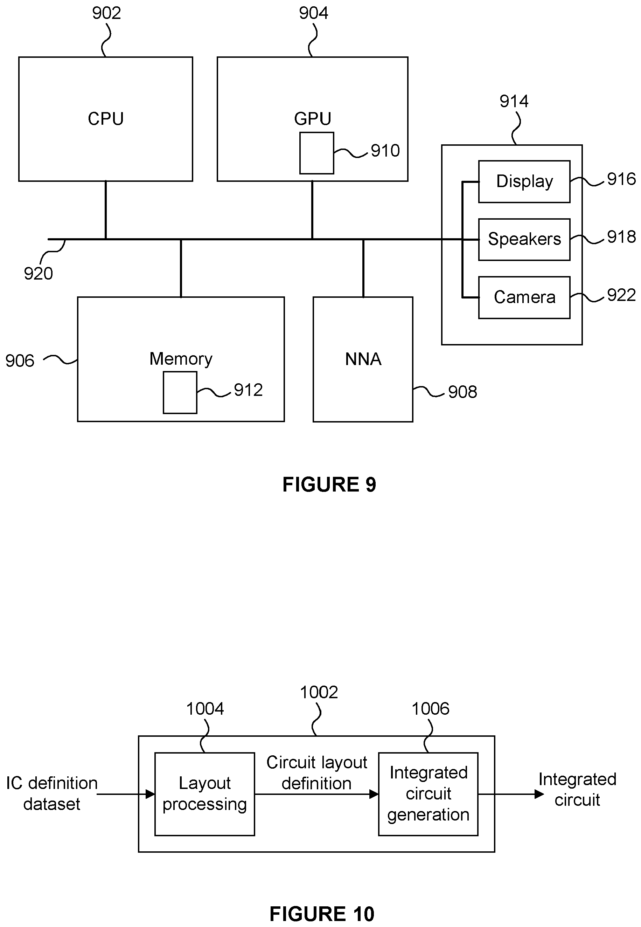

Figure 9 shows a computer system in which the graphics processing systems described herein may be implemented. The computer system comprises a CPU 902, a GPU 904, a memory 906, a neural network accelerator (NNA) 908 and other devices 914, such as a display 916, speakers 918 and a camera 922. The GPU 904 may correspond to the GPU 102, and the memory 906 may correspond to the memory 108. A processing block 910 (which may comprise the texture filtering unit 300) is implemented on the GPU 904. In other examples, one or more of the depicted components may be omitted from the system, and/or the processing block 910 may be implemented on the CPU 902 or within the NNA 908. The components of the computer system can communicate with each other via a communications bus 920. A store 912 (corresponding to the buffer described above) is implemented as part of the memory 906.

The processing units of Figures 1, 3 and 5 are shown as comprising a number of functional blocks. This is schematic only and is not intended to define a strict division between different logic elements of such entities. Each functional block may be provided in any suitable manner. It is to be understood that intermediate values described herein as being formed by a processing unit need not be physically generated by the processing unit at any point and may merely represent logical values which conveniently describe the processing performed by the processing unit between its input and output.

The processing units (e.g. GPUs) described herein may be embodied in hardware on an integrated circuit. The processing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing unit configured to perform any of the methods described herein, or to manufacture a processing unit comprising any apparatus described herein. An integrated circuit definition dataset may be, for example, an integrated circuit description.

Therefore, there may be provided a method of manufacturing, at an integrated circuit manufacturing system, a processing unit as described herein. Furthermore, there may be provided an integrated circuit definition dataset that, when processed in an integrated circuit manufacturing system, causes the method of manufacturing a processing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing unit (e.g. a GPU) will now be described with respect to Figure 10.

Figure 10 shows an example of an integrated circuit (IC) manufacturing system 1002 which is configured to manufacture a processing unit as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processing unit as described in any of the examples herein), process the IC definition dataset, and generate an IC according to the IC definition dataset (e.g. which embodies a processing unit as described in any of the examples herein). The processing of the IC definition dataset configures the IC manufacturing system 1002 to manufacture an integrated circuit embodying a processing unit as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A processing unit comprising a filtering unit which is configured to apply filtering to a plurality of sequences of input values to determine output values, the filtering unit comprising:

   a control block comprising a plurality of sequencers and an arbiter, wherein the control block is configured to allocate each of the sequences of input values to one of the sequencers, and wherein each of the sequencers is configured to define a sequence of operations of a filtering process to be performed in respect of a sequence of input values allocated to that sequencer; and
   a datapath block comprising a hardware logic component configured to perform operations by processing values for the operations to generate results of the operations as part of the filtering process;
   wherein the arbiter is configured to control access to the hardware logic component of the datapath block by the sequencers according to prioritization rules, wherein each operation to be performed by the hardware logic component has a priority in accordance with the prioritization rules, wherein:

   operations of a first set of operations have a high priority, wherein the first set of operations comprises input operations which involve input values;
   operations of a second set of operations have a medium priority, wherein the second set of operations comprises intermediate operations which do not involve input values and which determine intermediate result values rather than determining output values; and
   operations of a third set of operations have a low priority, wherein the third set of operations comprises output operations which determine output values.

2. The processing unit of claim 1 wherein the hardware logic component is configured to:

   in each of a plurality of clock cycles, receive a plurality of values for an operation; and
   process the received values through a pipeline over a plurality of clock cycles to generate a result of the operation as part of the filtering process.

3. The processing unit of any preceding claim wherein:

   the first set of operations comprises all input operations, and/or
   the third set of operations comprises all output operations which are not also input operations.

4. The processing unit of any preceding claim wherein:

the third set of operations comprises all operations which do not involve input values and which accumulate values derived from all previously received input values for the sequence of operations; and/or

the second set of operations comprises all operations which do not involve input values and which do not accumulate values derived from all previously received input values for the sequence of operations.

5. The processing unit of any preceding claim wherein each of the sequencers is configured to define, in a filtering mode which includes anisotropic filtering and trilinear filtering, a sequence of operations comprising: (i) a first set of anisotropic filtering operations which ends with a dot product operation, (ii) a second set of anisotropic filtering operations, and (iii) a trilinear interpolation operation which combines the result of the first set of anisotropic filtering operations with the result of the second set of anisotropic filtering operations to determine an output value for the sequence of operations,

wherein the dot product operation at the end of the first set of anisotropic filtering operations is in the third set of operations, and

optionally wherein the second set of operations comprises all intermediate operations which are not dot product operations at the end of a first set of anisotropic filtering operations in filtering modes which include anisotropic filtering and trilinear filtering.

6. The processing unit of any preceding claim wherein the arbiter is configured to control access to the hardware logic component of the datapath block by the sequencers by:

receiving requests from the sequencers identifying operations to be performed by the hardware logic component of the datapath block;

determining which of the identified operations has a highest priority of the identified operations;

if a single one of the identified operations is determined to have the highest priority of the identified operations, causing that one of the identified operations to be sent to the hardware logic component of the datapath block next; and

if a plurality of the identified operations are determined to have the highest priority of the identified operations, determining which of the plurality of the identified operations is to be sent to the hardware logic component of the datapath block next in accordance with a tie-breaking scheme.

7. The processing unit of claim 6 wherein the tie-breaking scheme orders the sequencers starting from a base sequencer, wherein the arbiter is configured to determine which of the plurality of identified operations that are determined to have the highest priority of the identified operations was requested by a sequencer that, according to the ordering of the sequencers in the tie-breaking scheme, is the first of the sequencers that requested the plurality of identified operations that are determined to have the highest priority;

optionally wherein:

until all of the sequencers have had all of the input operations in their sequences of operations sent for processing by the hardware logic component, the base sequencer is one of the sequencers that has not yet had all of the input operations in its sequence of operations sent for processing by the hardware logic component, and

the arbiter is configured to, in response to determining that a final input operation of the sequence of operations requested by the sequencer that is currently the base sequencer has been sent to the hardware logic component, update an indication of which of the sequencers is currently the base sequencer such that, if possible, the base sequencer is a sequencer that has not yet had all of the input operations in its sequence of operations sent for processing by the hardware logic component.

8. The processing unit of any preceding claim wherein the datapath block further comprises a set of scratchpad registers for each of the sequencers, wherein the set of scratchpad registers for a sequencer is arranged to store intermediate result values generated by the hardware logic component when performing an operation in the sequence of operations defined by that sequencer.

9. The processing unit of claim 8 wherein the hardware logic component comprises a first input and a second input;

wherein the set of scratchpad registers for a sequencer comprises:

a first subset of scratchpad registers which are configured to provide values to the first input of the hardware logic component but not to the second input of the hardware logic component; and

a second subset of scratchpad registers which are configured to provide values to the second input of the hardware logic component but not to the first input of the hardware logic component,

optionally wherein the datapath block comprises multiplexing logic configured to:

receive values from the scratchpad registers;

receive input values; and

output values to the first and second inputs of the hardware logic component,

and wherein the arbiter is configured to use the multiplexing logic to control which values are provided to the first and second inputs of the hardware logic component in each of a plurality of clock cycles.

10. The processing unit of claim 9, wherein the sequencers are configured to determine, for each intermediate result value generated by the hardware logic component, a destination location in one of the scratchpad registers for storing the intermediate result value, and wherein the sequencers are configured such that, if two intermediate result values are to be used together in a subsequent operation on the hardware logic component, a first of the two intermediate result values is stored in a scratchpad register of the first subset of scratchpad registers and a second of the two intermediate result values is stored in a scratchpad register of the second subset of scratchpad registers.

11. The processing unit of any preceding claim wherein the hardware logic component is a two-dimensional dot product unit, wherein the datapath block does not comprise a dedicated addition unit, and wherein the datapath block is configured to perform addition operations using the two-dimensional dot product unit by setting coefficients of the two-dimensional dot product unit to have a value of 1.

12. The processing unit of any preceding claim wherein the filtering unit is arranged to receive the plurality of sequences of input values in sets of input values, wherein the input values within a set are interleaved input values from the plurality of sequences of input values, and wherein the input values within a set are accessed from memory at the same time.

13. A method of applying filtering to a plurality of sequences of input values to determine output values within a processing unit, wherein the processing unit comprises a filtering unit, the filtering unit comprising a plurality of sequencers and a datapath block which comprises a hardware logic component, the method comprising:

allocating each of the sequences of input values to one of the sequencers, wherein each of the sequencers defines a sequence of operations of a filtering process to be performed in respect of a sequence of input values allocated to that sequencer;

controlling access to the hardware logic component of the datapath block by the sequencers according to prioritization rules,

performing operations at the hardware logic component by processing values for the operations to generate results of the operations as part of the filtering process;

wherein each operation to be performed by the hardware logic component has a priority in accordance with the prioritization rules, wherein:

operations of a first set of operations have a high priority, wherein the first set of operations comprises input operations which involve input values;

operations of a second set of operations have a medium priority, wherein the second set of operations comprises intermediate operations which do not involve input values and which determine intermediate result values rather than determining output values; and

operations of a third set of operations have a low priority, wherein the third set of operations comprises output operations which determine output values.

14. Computer readable code configured to cause the method of claim 13 to be performed when the code is run.

15. A computer readable storage medium having stored thereon an integrated circuit definition dataset that, when processed in an integrated circuit manufacturing system, configures the integrated circuit manufacturing system to manufacture a processing unit as claimed in any of claims 1 to 12.

**FIGURE 1**

**FIGURE 2A**

**FIGURE 2B**

**FIGURE 2C**

300

CONTROL

ENABLE
SIGNALS
303

COEFFICIENTS
302

314

ARBITER

SEQUENCER

312

308

316

DATAPATH

310

304
INPUT 0

INPUT 1
306

323

318

Hardware logic component

OUTPUT
324

SCRATCH
PAD

320

322

FIGURE 3

VA2T

**FIGURE 4A**

**FIGURE 4B**

**FIGURE 4C**

EP 4 654 120 A1

**FIGURE 5**

EP 4 654 120 A1

Receive sequences of input values ⟋ S602

Allocate the sequences of input values to the sequencers ⟋ S604

Control access to the hardware logic component by the sequencers ⟋ S606

Perform operations at the hardware logic component ⟋ S608

## FIGURE 6

| Number of sequences per set | Interleaved input cycles |
|---|---|
| 1 | 0 1 2  ⟋702 |
| 2 | 0 0 1 1 2 2  ⟋704 |
| 3 | 0 0 0 1 1 1 2 2 2  ⟋706 |
| 4 | 0 0 0 0 1 1 1 1 2 2 2 2  ⟋708 |

## FIGURE 7

**V, A2 or T**

| clk | pri | state | R0 | R1 | R2 | R3 | R4 | Y |
|---|---|---|---|---|---|---|---|---|
| 0 | 3 | START_IN0 | | | | | | $a_0$   $a_1$ |
| 1 | | | | | | | | |
| 2 | | | | | | | | X   ~802 |
| 3 | | | | | | | | |
| 4 | | | | | | | | |

**FIGURE 8A**

**VT or A2T**

| clk | pri | state | R0 | R1 | R2 | R3 | R4 | Y |
|---|---|---|---|---|---|---|---|---|
| 0 | 3 | START_IN0 | | | | | $a_0$   $a_1$ | |
| 1 | 3 | START_IN3 | $a_0$   $a_1$ | | | | | |
| 2 | 0 | END_WAIT | | ~806 | | | X   ~804 | |
| 3 | 0 | TRI_WAIT | X | | | | | |
| 4 | 1 | TRI_DP | | | | | | |
| 5 | | | | | | | | |
| 6 | | | | | | | | t   ~808 |
| 7 | | | | | | | | |
| 8 | | | | | | | | |

**FIGURE 8B**

**A6**

| clk | pri | state | R0 | R1 | R2 | R3 | R4 | Y |
|---|---|---|---|---|---|---|---|---|
| 0 | 3 | START_IN0 | $a_0$  $a_1$ | | | | | |
| 1 | 3 | START_IN1 | | $a_0$  $a_1$ | | | | |
| 2 | 3 | START_IN3 | + 810 | | | $a_0$  $a_1$ | | |
| 3 | 0 | END_WAIT | | + 812 | | | | |
| 4 | 2 | END_ACC0 | | | | + 814 | | |
| 5 | 0 | ANI_WAIT0 | | | | | | |
| 6 | 0 | ANI_WAIT1 | + 816 | | | | | |
| 7 | 1 | ANI_DP | | | | | | |
| 8 | | | | | | | | |
| 9 | | | | | | | | A 818 |
| 10 | | | | | | | | |
| 11 | | | | | | | | |

## FIGURE 8C

**VA2T**

| clk | pri | state | R0 | R1 | R2 | R3 | R4 | Y |
|---|---|---|---|---|---|---|---|---|
| 0 | 3 | START_IN0 | $a_0$  $a_1$ | | | | | |
| 1 | 3 | START_IN1 | | $a_0$  $a_1$ | 821 | | | |
| 2 | 3 | START_IN2 | v 820 | | $a_0$  $a_1$ | 822 | | |
| 3 | 3 | START_IN3 | | v | | $a_0$  $a_1$ | | |
| 4 | 2 | ANI_WAIT0 | | | v | | | |
| 5 | 0 | ANI_WAIT1 | | | | v 823 | | |
| 6 | 2 | ANI_DP | | | | | a 824 | |
| 7 | 0 | ANI_WAIT2 | | | | | | |
| 8 | 0 | TRI_WAIT | a 825 | | | | | |
| 9 | 1 | TRI_DP | | | | | | |
| 10 | | | | | | | | |
| 11 | | | | | | | | t 826 |
| 12 | | | | | | | | |
| 13 | | | | | | | | |

## FIGURE 8D

**A6T**

| clk | pri | state | R0 | R1 | R2 | R3 | R4 | Y |
|---|---|---|---|---|---|---|---|---|
| 0 | 3 | START_IN0 | $a_0$   $a_1$ | | | | | |
| 1 | 3 | START_IN1 | | $a_0$   $a_1$ | | | | |
| 2 | 3 | START_IN3 | + 830 | | | $a_0$   $a_1$ | | |
| 3 | 0 | END_WAIT | | + 831 | | | | |
| 4 | 2 | END_ACC0 | | | | + 832 | | |
| 5 | 0 | ANI_WAIT0 | | | | | | |
| 6 | 0 | ANI_WAIT1 | + 833 | | | | | |
| 7 | 1 | ANI_DP | | | | | | |
| 8 | 3 | START_IN0 | $a_0$   $a_1$ | | | | a 834 | |
| 9 | 3 | START_IN1 | | $a_0$   $a_1$ | | | | |
| 10 | 3 | START_IN3 | + 835 | | | $a_0$   $a_1$ | | |
| 11 | 0 | END_WAIT | | + 836 | | | | |
| 12 | 2 | END_ACC0 | | | | + 837 | | |
| 13 | 0 | ANI_WAIT0 | | | | | | |
| 14 | 0 | ANI_WAIT1 | + 838 | | | | | |
| 15 | 2 | ANI_DP | | | | | | |
| 16 | 0 | ANI_WAIT2 | | | | | | |
| 17 | 0 | TRI_WAIT | a 839 | | | | | |
| 18 | 1 | TRI_DP | | | | | | |
| 19 | | | | | | | | |
| 20 | | | | | | | | t 840 |
| 21 | | | | | | | | |
| 22 | | | | | | | | |

**FIGURE 8E**

**A8, A12, A16**

| clk | pri | state | R0 | R1 | R2 | R3 | R4 | Y |
|---|---|---|---|---|---|---|---|---|
| 0 | 3 | START_IN0 | $a_0$  $a_1$ | | | | | |
| 1 | 3 | START_IN1 | | $a_0$  $a_1$ | | | | |
| 2 | 3 | START_IN2 | + 850 | | $a_0$  $a_1$ | | | |
| 3 | 3 | START_IN3 | | + 851 | | $a_0$  $a_1$ | | |
| 4 | 2 | MID_0 | | | + 852 | | | |
| 5 | 3 | MID_1 | | $a_0$  $a_1$ | | + 853 | | |
| 6 | 2 | MID_2 | + 854 | | | | | |
| 7 | 3 | MID_3 | | + 855 | | $a_0$  $a_1$ | | |
| 8 | 2 | MID_0 | | | + 856 | | | |
| 9 | 3 | MID_1 | | $a_0$  $a_1$ | | + 857 | | |
| 10 | 2 | MID_2 | + 858 | | | | | |
| 11 | 3 | MID_3 | | + 859 | | $a_0$  $a_1$ | | |
| 12 | 2 | MID_0 | | | + 860 | | | |
| 13 | 0 | MID_1 | | | | + 861 | | |
| 14 | 0 | END_WAIT | | + 862 | | | | |
| 15 | 2 | AND_ACC0 | | | | | | |
| 16 | 0 | ANI_WAIT0 | | | | | | |
| 17 | 0 | ANI_WAIT1 | + 863 | | | | | |
| 18 | 1 | ANI_DP | | | | | | |
| 19 | | | | | | | | |
| 20 | | | | | | | | a 864 |
| 21 | | | | | | | | |
| 22 | | | | | | | | |

A8

A12

**FIGURE 8F**

EP 4 654 120 A1

**A8T, A12T, A16T**

| clk | pri | state | R0 | R1 | R2 | R3 | R4 | Y |
|---|---|---|---|---|---|---|---|---|
| 0 | 3 | START_IN0 | $a_0$  $a_1$ | | | | | |
| 1 | 3 | START_IN1 | | $a_0$  $a_1$ | | | | |
| 2 | 3 | START_IN2 | +  868 | | $a_0$  $a_1$ | | | |
| 3 | 3 | START_IN3 | | +  869 | | $a_0$  $a_1$ | | |
| 4 | 2 | MID_0 | | | +  870 | | | |
| 5 | 3 | MID_1 | | $a_0$  $a_1$ | | +  871 | | |
| 6 | 2 | MID_2 | +  872 | | | | | |
| 7 | 3 | MID_3 | | +  873 | | $a_0$  $a_1$ | | |
| 8 | 2 | MID_0 | | | +  874 | | | |
| 9 | 3 | MID_1 | | $a_0$  $a_1$ | | +  875 | | |
| 10 | 2 | MID_2 | +  876 | | | | | |
| 11 | 3 | MID_3 | | +  877 | | $a_0$  $a_1$ | | |
| 12 | 2 | MID_0 | | | +  878 | | | |
| 13 | 0 | MID_1 | | | | +  879 | | |
| 14 | 0 | END_WAIT | | +  880 | | | | |
| 15 | 2 | AND_ACC0 | | | | | | |
| 16 | 0 | ANI_WAIT0 | | | | | | |
| 17 | 0 | ANI_WAIT1 | +  881 | | | | | |
| 18 | 1 | ANI_DP | | | | | | |
| 19 | 3 | START_IN0 | $a_0$  $a_1$ | | | | | |
| 20 | 3 | START_IN1 | | $a_0$  $a_1$ | | | a  882 | |
| 21 | 3 | START_IN2 | +  883 | | $a_0$  $a_1$ | | | |
| 22 | 3 | START_IN3 | | +  884 | | $a_0$  $a_1$ | | |
| 23 | 2 | MID_0 | | | +  885 | | | |
| 24 | 3 | MID_1 | | $a_0$  $a_1$ | | +  886 | | |
| 25 | 2 | MID_2 | +  887 | | | | | |
| 26 | 3 | MID_3 | | +  888 | | $a_0$  $a_1$ | | |
| 27 | 2 | MID_0 | | | +  889 | | | |
| 28 | 3 | MID_1 | | $a_0$  $a_1$ | | +  890 | | |
| 29 | 2 | MID_2 | +  891 | | | | | |
| 30 | 3 | MID_3 | | +  892 | | $a_0$  $a_1$ | | |
| 31 | 2 | MID_0 | | | +  893 | | | |
| 32 | 0 | MID_1 | | | | +  894 | | |
| 33 | 0 | END_WAIT | | +  895 | | | | |
| 34 | 2 | AND_ACC0 | | | | | | |
| 35 | 0 | ANI_WAIT0 | | | | | | |
| 36 | 0 | ANI_WAIT1 | +  896 | | | | | |
| 37 | 2 | ANI_DP | | | | | | |
| 38 | 0 | ANI_WAIT2 | | | | | | |
| 39 | 0 | TRI_WAIT | a  897 | | | | | |
| 40 | 1 | TRI_DP | | | | | | |
| 41 | | | | | | | | |
| 42 | | | | | | | | t  898 |
| 43 | | | | | | | | |
| 44 | | | | | | | | |

A8
A12

A8
A12

**FIGURE 8G**

40

902

904

914

CPU

GPU

910

Display 916

Speakers 918

Camera 922

920

906 Memory 912

NNA

908

**FIGURE 9**

1004 1002 1006

IC definition dataset → Layout processing → Circuit layout definition → Integrated circuit generation → Integrated circuit

**FIGURE 10**

Europäisches
Patentamt

European
Patent Office

Office européen
des brevets

# EUROPEAN SEARCH REPORT

**Application Number**

EP 25 17 7478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 591 619 A1 (IMAGINATION TECH LTD [GB]) 8 January 2020 (2020-01-08)<br>* claim 1 *<br>* paragraph [0005] - paragraph [0006] *<br>* paragraph [0045] *<br>* paragraph [0055] *<br>----- | 1-15 | INV.<br>G06T1/20<br>G06T11/00<br>G06T15/00<br>G06T15/04 |
| A | US 2009/160870 A1 (WANG WEI-TING [TW] ET AL) 25 June 2009 (2009-06-25)<br>* paragraph [0014] *<br>----- | 1-15 | |
| A | US 2007/165035 A1 (DULUK JEROME F JR [US] ET AL) 19 July 2007 (2007-07-19)<br>* paragraph [2177] - paragraph [2179] *<br>----- | 1-15 | |
| A | CN 116 310 070 A (SHANGHAI ILUVATAR COREX SEMICONDUCTOR CO LTD)<br>23 June 2023 (2023-06-23)<br>* paragraph [0044] - paragraph [0046] *<br>----- | 1-15 | |

**TECHNICAL FIELDS SEARCHED (IPC)**

G06T

The present search report has been drawn up for all claims

| Place of search | Date of completion of the search | Examiner |
|---|---|---|
| Munich | 1 October 2025 | Fischer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 7478

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | | Publication date | Patent family member(s) | | Publication date |
|---|---|---|---|---|---|
| EP 3591619 | A1 | 08-01-2020 | CN | 110349244 A | 18-10-2019 |
| | | | CN | 115393493 A | 25-11-2022 |
| | | | EP | 3591619 A1 | 08-01-2020 |
| | | | EP | 4191535 A1 | 07-06-2023 |
| | | | GB | 2567507 A | 17-04-2019 |
| | | | GB | 2577619 A | 01-04-2020 |
| | | | US | 2019311520 A1 | 10-10-2019 |
| | | | US | 2020193680 A1 | 18-06-2020 |
| | | | US | 2022084276 A1 | 17-03-2022 |
| US 2009160870 | A1 | 25-06-2009 | TW | 200929061 A | 01-07-2009 |
| | | | US | 2009160870 A1 | 25-06-2009 |
| US 2007165035 | A1 | 19-07-2007 | AU | 5580799 A | 14-03-2000 |
| | | | AU | 5686199 A | 14-03-2000 |
| | | | AU | 5686299 A | 14-03-2000 |
| | | | AU | 5688199 A | 14-03-2000 |
| | | | US | 6229553 B1 | 08-05-2001 |
| | | | US | 6268875 B1 | 31-07-2001 |
| | | | US | 6288730 B1 | 11-09-2001 |
| | | | US | 6476807 B1 | 05-11-2002 |
| | | | US | 6525737 B1 | 25-02-2003 |
| | | | US | 6552723 B1 | 22-04-2003 |
| | | | US | 6577305 B1 | 10-06-2003 |
| | | | US | 7164426 B1 | 16-01-2007 |
| | | | US | 2002196251 A1 | 26-12-2002 |
| | | | US | 2003067468 A1 | 10-04-2003 |
| | | | US | 2007165035 A1 | 19-07-2007 |
| | | | WO | 0010372 A2 | 02-03-2000 |
| | | | WO | 0011562 A1 | 02-03-2000 |
| | | | WO | 0011602 A2 | 02-03-2000 |
| | | | WO | 0011603 A2 | 02-03-2000 |
| | | | WO | 0011607 A1 | 02-03-2000 |
| CN 116310070 | A | 23-06-2023 | NONE | | |

EPO FORM P0459

For more details about this annex : see Official Journal of the European Patent Office, No. 12/82

**REFERENCES CITED IN THE DESCRIPTION**

**Patent documents cited in the description**

- GB 2407296 A

- GB 2567507 B